# EUROPÄISCHE PATENTSCHRIFT

(11) **EP 2 540 769 B1**
(45) Veröffentlichungstag und Bekanntmachung des Hinweises auf die Patenterteilung: **15.03.2017**
(21) Anmeldenummer: 12006548.7
(22) Anmeldetag: 12.08.2010
(51) Int. Cl.: C08K 5/053, C09J 167/00, G02B 6/02, B24B 13/005, C08L 63/00, C08L 67/02

(54) **Zusammensetzung, insbesondere Blockmittelzusammensetzung, zur Fixierung von Rohlingen für ophthalmische oder optische Linsen**
Compound, in particular blocking agent compound, for fixing blanks for ophthalmic or optical lenses
Composition, en particulier composition pour agent adhérent, destinée à la fixation d'ébauches pour lentilles ophtalmiques ou optiques

(30) Priorität: 14.08.2009 DE 102009037360; 21.09.2009 DE 102009042005; 30.09.2009 DE 102009043727
(43) Veröffentlichungstag der Anmeldung: 02.01.2013
(62) Teilanmeldung aus: 10745540.4
(73) Patentinhaber: Schneider GmbH & Co. KG, 35112 Fronhausen (DE)
(72) Erfinder: Schneider, Gunter, D - 35037 Marburg (DE); Huttenhuis, Stephan, D - 35041 Marburg (DE); Achenbach, Ferdinand, D - 35236 Breidenbach-Wolzhausen (DE)
(74) Vertreter: Von Rohr Patentanwälte Partnerschaft mbB

(56) Entgegenhaltungen:
- EP-A1- 2 036 935
- WO-A1-92/03515
- WO-A1-98/41359
- WO-A1-2008/137545
- DE-A1- 1 769 154

## Beschreibung

Die vorliegende Erfindung betrifft das Gebiet der Herstellung von ophthalmischen und/oder optischen Linsen, welche beispielsweise in Form von insbesondere kunststoffbasierten Brillengläsern bzw. Kunststoffbrillengläsern ausgebildet sein können, ausgehend von entsprechenden Linsenrohlingen bzw. Brillenglasrohlingen.

Derartige Rohlinge werden im allgemeinen zu Zwecken der nachfolgenden maschinellen Bearbeitung - insbesondere in Form von Schleif-, Zerspan- und/oder Poliervorgängen - zum Erhalt der endfertigen Linsen bzw. Brillengläser zunächst mit Hilfe einer Blockmittelzusammensetzung auf einem Träger bzw. Block (Blockstück) fixiert bzw. mit diesem verklebt, um so eine möglichst starre und sichere Befestigung des Rohlings während der Bearbeitungsvorgänge zu gewährleisten, was die Qualität des endfertigen Produktes deutlich erhöhen kann.

Insbesondere betrifft die vorliegende Erfindung eine (Haftmittel-)Zusammensetzung, insbesondere eine Blockmittelzusammensetzung bzw. ein Blockmittel, mit welchem die zu bearbeitenden ophthalmischen bzw. optischen Linsen bzw. kunststoffbasierten Rohlinge auf einem Träger bzw. Block zu Zwecken der weiteren Bearbeitung fixiert werden können.

Zudem betrifft die vorliegende Erfindung ein Verfahren zur Fixierung der vorgenannten Rohlinge auf einer Trägerstruktur, wie einem Block bzw. Blockstück, unter Verwendung der erfindungsgemäßen (Haftmittel-)-Zusammensetzung.

Des weiteren betrifft die vorliegende Erfindung einen Verbund, welcher einen Träger bzw. Block bzw. ein Blockstück sowie einen auf dem Träger fixierten Rohling der vorgenannten Art aufweist, wobei der Rohling mittels der erfindungsgemäßen Zusammensetzung auf dem Träger fixiert ist.

Weiterhin betrifft die vorliegende Erfindung ein Verfahren zur Herstellung einer ophthalmischen bzw. optischen Linse, vorzugsweise eines kunststoffbasierten Brillenglases, wobei eine weiterführende Bearbeitung des mittels der erfindungsgemäßen Zusammensetzung auf einem Block fixierten Rohlings erfolgt, um auf diese Weise das endfertige Produkt in Form einer ophthalmischen bzw. optischen Linse, vorzugsweise eines kunststoffbasierten Brillenglases, zu erhalten. Das resultierende Produkt kann dabei gegebenenfalls noch weiteren (Nach-)Bearbeitungsschritten, wie einer Beschichtungsbehandlung bzw. einem Coating, unterzogen werden.

Weiterhin betrifft die vorliegende Erfindung die Verwendung der Zusammensetzung in der Herstellung von ophthalmischen und/oder optischen Linsen, vorzugsweise von kunststoffbasierten Brillengläsern.

Schließlich betrifft die vorliegende Erfindung die Verwendung der Zusammensetzung, insbesondere Blockmittelzusammensetzung, nach der Erfindung zur Fixierung eines Brillenglasrohlings auf einem Träger, insbesondere einem Blockstück.

Im Rahmen der Herstellung von insbesondere kunststoffbasierten Brillenglasrohlingen bzw. ophthalmischen und/oder optischen Linsen wird im Stand der Technik im allgemeinen derart vorgegangen, daß ein entsprechender Rohling auf Kunststoffbasis, welcher oftmals in gegossener Form mit einer optischen Qualität vorliegt, auf eine Trägerstruktur bzw. einen Block fixiert wird, um eine maschinelle Bearbeitung der dem Block gegenüberliegenden Seite des Rohlings bzw. eine Formgebung des Rohlings an sich zu ermöglichen. Der Rohling kann im allgemeinen sphärisch ausgebildet sein, wobei die jeweiligen Seiten des Rohlings unabhängig voneinander ausgebildete Radien aufweisen können. Gleichermaßen kann der Rohling aber auch mindestens eine Flachseite aufweisen. Der Rohling kann mit einer seiner sphärisch ausgebildeten Seiten und im Fall des Vorhandenseins einer Flachseite vorzugsweise mit der Flachseite auf der Trägerstruktur bzw. dem Block fixiert werden. Auf diese Weise können einerseits die optischen Eigenschaften des Rohlings modifiziert und andererseits kann eine Formgebung des Brillenglases, beispielsweise im Hinblick auf eine Abstimmung mit einer Brillenfassung, ermöglicht werden. Hierbei werden beispielsweise dem Fachmann an sich bekannte Verfahren auf Basis von Zerspanen, Fräsen, Drehen, Schleifen, Polieren oder dergleichen eingesetzt.

Der zur Aufnahme des Rohlings vorgesehene Träger bzw. Block fungiert dabei gleichermaßen als Kupplungsteil zur Aufnahme in einer entsprechenden Bearbeitungsmaschine, wobei der diesbezügliche Kupplungsabschnitt des Blockes im allgemeinen auf der dem zu fixierenden Rohling gegenüberliegenden Seite des Trägers angeordnet bzw. ausgebildet ist. Im Rahmen der Fixierung bzw. Befestigung des Rohlings auf dem Träger bzw. Block wird im allgemeinen derart vorgegangen, daß zwischen Block einerseits und Rohling andererseits ein Hohlraum etabliert wird, welcher mit einem Haftmittel bzw. einer Blockmittelzusammensetzung verfüllt bzw. aufgefüllt wird, um auf diese Weise eine Fixierung des Rohlings zu ermöglichen. Nach der erfolgten maschinellen Bearbeitung des Rohlings wird der Rohling bzw. das resultierende Brillenglas bzw. die erhaltene optische Linse aus dem Verbund gelöst, was beispielsweise unter Einsatz mechanischer und/oder thermischer Verfahren erfolgen kann.

Im allgemeinen wird der aufzublockende Brillenglasrohling zu Zwecken der Fixierung bzw. zur Auffüllung des Hohlraumes über dem Block bzw. seitlich zu dem in diesem Fall geneigten bzw. gekippten Block angeordnet, wobei in beiden Fällen der Rohling beabstandet gegenüber der Stirn- bzw. Aufnahmefläche des Blockes angeordnet wird. Zur Bereitstellung eines durch die Haftmasse bzw. Blockmittelzusammensetzung zu füllenden Hohlraums kann ein Dichtmittel, insbesondere ein Blockring, zur abdichtenden Begrenzung und somit gewissermaßen als Dichtung bzw. Dichteinrichtung (Dichtring) sowie gegebenenfalls eine Führungskalotte zwischen dem Brillenglasrohling einerseits und dem Blockstück andererseits eingesetzt werden. Die Ausbildung bzw. Abdichtung des Hohlraums kann gegebenenfalls durch eine sogenannte Führungskalotte und/oder durch eine Aufnahmekalotte flankiert werden, welche im allgemeinen unterhalb des Rohlings angeordnet sein können und funktional einer im Rahmen der Blockung eingesetzten Aufblockmaschine zugeordnet werden können. Im allgemeinen beträgt das Volumen des Hohlraums etwa 25 bis 40 cm³, wobei der Hohlraum mit einer entsprechenden Menge an Haft- bzw. Blockmittelzusammensetzung verfüllt wird. Im allgemeinen besitzt der Block zur Aufnahme des Trägers einen Durchmesser von etwa 43 mm, wobei es üblicherweise vorgesehen ist, daß der Rohling, welcher im allgemeinen einen Durchmesser von etwa 60 bis 85 mm aufweist, insbesondere konzentrisch auf dem Block fixiert wird, so daß der Rohling den Block über dem gesamten Umfang des Blockes überragt. Ebenso kann der Rohling auch in Form einer prismatischen Verkippung und/oder dezentriert auf dem Block fixiert werden.

Im allgemeinen kann derart vorgegangen werden, daß zum Aufblocken eines Brillenglasrohlings auf einem Block bzw. Blockstück sowohl das Blockstück als auch der Brillenglasrohling in einer Aufblockvorrichtung bzw. -maschine plaziert werden. Die Aufblockmaschine kann eine Aufnahmekalotte zur Aufnahme des Blockstückes aufweisen. Zu Zwecken der Ausrichtung des Blockstückes bzw. der Aufnahmekalotte relativ zum Brillenglasrohling kann zudem eine Führungskalotte vorgesehen sein, die z. B. über einen Schwenkteller in der Aufblockmaschine gelagert sein kann. Der aufzublockende Brillenglasrohling kann über dem Blockstück positioniert werden, wobei zu Zwecken der Ausbildung eines mit der Blockzusammensetzung zu füllenden Hohlraums ein als abdichtende Begrenzung bzw. Dichtmittel ausgebildeter Blockring und/oder eine Führungskalotte zwischen dem Brillenglasrohling und dem Blockstück bzw. der Aufnahmekalotte angeordnet werden können. Dabei kann der Blockring zur abdichtenden Ausbildung des Hohlraumes gegenüber dem Brillenglasrohling sowie gegenüber der Führungskalotte und/oder dem Blockstück abdichten. Die Führungskalotte kann gegenüber der Aufnahmekalotte und/oder dem Blockstück abdichten. Die Blockzusammensetzung kann über eine insbesondere im Blockring angebrachte Einfüllöffnung in den Hohlraum eingefüllt werden.

Eine Vorrichtung zum Blocken eines Brillenglasrohlings auf einem Block bzw. Blockstück mittels einer Verbindungsmasse ist z. B. in der DE 30 35 989 A1 beschrieben. Mit der dort beschriebenen Vorrichtung kann eine niedrigschmelzende Metallegierung als Verbindungsmasse verwendet werden, die aufgrund der Schwerkraft aus einem Vorratsbehälter in den Hohlraum mittels einer Einfüllstelle verfüllt wird.

Die DE 103 04 388 A1 betrifft ein Blockstück zur Aufnahme eines Rohlings, welches zerspanbar ausgebildet ist. Diesbezüglich wird der Rohling jedoch nicht unter Verwendung einer thermoplastischen Haftmasse auf dem Träger fixiert. Vielmehr wird eine Klebefolie zur Fixierung eingesetzt, wobei diesbezüglich mitunter ein speziell in bezug auf den Rohling vorgeformtes Halteteil eingesetzt werden muß, um eine möglichst großflächige Fixierung des Rohlings zu ermöglichen.

Weiterhin betrifft die DE 10 2005 038 063 A1 ein vorgeformtes Blockstück mit drei Aufnahmepunkten zur Aufnahme eines Linsenrohlings, wobei durch eine spezielle Formgebung des Blockstücks die Menge an zu verwendenden Haftmittel auf ein Minimum reduziert werden soll.

Auch die EP 0 851 800 B1 betrifft einen Block für Linsenrohlinge, bei welchem der Linsenrohling jedoch über eine festgewordene Masse aus einer thermoplastischen Haltemasse auf Basis eines Homopolymers oder Copolymers von ε-Caprolacton fixiert wird.

Zudem betrifft die WO 92/03515 A1 die Verwendung eines Polyesterharzes aus einbasischen Carbonsäuren bzw. deren Estern, mehrbasigen Carbonsäuren bzw. deren Anhydriden, mehrwertigen Alkoholen und Polyethylenglykol mit wenigstens anteilsweise unter Salzbildung abreagierten Restsäurecarboxylgruppen als mit wässriger Lösungen entfernbare Haftschmelzklebstoffe.

Weiterhin betrifft die DE 1 769 154 A1 eine Mischung, welche ein Polyesterharz, Mg(OH)₂ und eine aliphatische Monocarbonsäure oder ein flüssiges Polyol oder Wasser als Potentierungsmittel enthält.

Darüber hinaus betrifft die WO 2008/137545 A1 ein ophthalmisches Blockstück bzw. -kissen, welches eine Schaumschicht sowie eine über der Schaumschicht angeordnete und im direkten Kontakt hierzu stehende Folienschicht umfasst. Gleichermaßen ist eine Klebschicht vorhanden, welche auf der Folienschicht angeordnet ist. Die Folienschicht soll dabei eine bestimmte Zugfestigkeit aufweisen.

Die EP 2 036 935 A1 betrifft eine polymerisierbare Zusammensetzung, welche ein cycloaliphatisches Epoxid, einen einwertigen Alkohol und einen Photopolymerisationsstarter enthält.

Im Stand der Technik sind zur Fixierung bzw. Verklebung von Rohlingen für ophthalmische bzw. optische Linsen bzw. für Brillengläser auf Trägerstrukturen zu Zwecken der nachfolgenden maschinellen Bearbeitung zahlreiche Ansätze bekannt, wobei eine vorrangige Zielsetzung darin gesehen werden kann, eine sichere und beständige Verbindung zwischen Linsen- bzw. Brillenglasrohling einerseits und Träger bzw. Blockstück andererseits zu ermöglichen, damit die so resultierende Einheit mit dem Rohling den bei der weiterführenden maschinellen Bearbeitung auftretenden Kräften widerstehen kann.

Diesbezüglich werden im Stand der Technik oftmals Metallegierungen als Haftmasse eingesetzt, welche im allgemeinen eine niedrige Schmelztemperatur im Bereich von etwa 50 °C aufweisen, um an der insbesondere halbfertigen Oberfläche eines Rohlings eine Verbindung bzw. Fixierung mit einem dem Rohling gegenüberliegenden Block zu ermöglichen, so daß auf diese Weise die dem Block gegenüberliegende Seite des Brillenglasrohlings einer nachfolgenden Verarbeitung zugänglich ist. Eine derartige Befestigung wird im Stand der Technik im allgemeinen auch als "Linsen-Blocking" bezeichnet.

Eine im Stand der Technik bekannte Metallegierung mit niedriger Schmelztemperatur kann z. B. die Elemente Bismut, Zinn, Blei, Cadmium, Indium und Antimon umfassen. Eine derartige Legierung weist dabei einen niedrigeren Schmelzpunkt als die Einzelelemente auf, was bei der Fixierung von kunststoffbasierten Rohlingen zur Vermeidung von temperaturbedingten Beschädigungen mitunter von Bedeutung ist.

Nachteilig bei derartigen Legierungen des Standes der Technik ist die Tatsache, daß von ihnen eine erhebliche Umwelt- bzw. Gesundheitsgefahr ausgeht, insbesondere da zahlreiche Inhaltsstoffe der Legierung stark toxisch sind und mitunter auch als sogenannte Protoplasmatoxine angesehen werden, welche bei Aufnahme in den menschlichen Körper, beispielsweise durch Inhalation oder Hautadsorption, zu einer gesundheitlichen Beeinträchtigung führen können. Diese Gefahren sind besonders vor dem Hintergrund von Bedeutung, daß im Rahmen der Bearbeitung von Brillenglasrohlingen aufgrund der eingesetzten Bearbeitungsverfahren Staub-, Feinstaub- bzw. Rauchteilchen freigesetzt werden können, was zu einer erheblichen Exposition der Umwelt mit den schädlichen Substanzen führen kann. Weiterhin ist in bezug auf die im Stand der Technik bekannten Metallegierungen nachteilig, daß diese zum einen teuer sind, insbesondere da sie als solche nicht rezyklierbar sind, und daß zum anderen auch ein nur eingegrenztes Einsatzspektrum dahingehend möglich ist, daß insbesondere aufgrund der hohen Materialkosten nur bestimmte Rohlinge mit speziellen Geometrien fixiert werden können.

Als Alternative zu den zuvor beschriebenen Metallegierungen wurde im Stand der Technik auch versucht, diese durch Kunststoffzusammensetzungen zu ersetzen, welche beispielsweise thermoplastische Harze umfassen. Derartige Zusammensetzungen weisen jedoch im allgemeinen nicht immer optimale physikalische Eigenschaften auf. Insbesondere sind derartige Zusammensetzungen relativ spröde, und auch die Kohäsionskraft und Zugfestigkeit sind nicht immer optimal. Zudem können sich derartige Zusammensetzungen insbesondere bei der Bearbeitung des Rohlings verformen oder zu weich werden, was sich negativ auf die Qualität des herzustellenden Brillenglases auswirkt, da die Oberfläche ungleichmäßig ausgebildet werden kann. Zudem ist das Reinigen der Brillengläser bzw. Linsen von diesen Zusammensetzungen schwierig und mitunter sehr zeitintensiv, was insgesamt die Kosten der Herstellung von Brillengläsern weiter erhöht.

Die EP 0 968 074 B1 betrifft ein thermoplastisches Linsenaufnahmematerial auf Kunststoffbasis, wobei insbesondere auf den Einsatz von Homopolymeren oder Copolymeren von ε-Caprolacton für die dort beschriebene Zusammensetzung abgestellt wird. Die dort beschriebenen Zusammensetzungen sind insofern nachteilig, als die Ausgangsmaterialien relativ teuer sind und die Zusammensetzungen zudem keine gute Thermostabilität aufweisen. Auch die Hafteigenschaften sind mitunter nicht immer ausreichend. In diesem Zusammenhang betrifft die WO 98/41359 A1 einen ophthalmischen Linsenblock, welcher eine verfestigte Masse einer thermoplastischen Blockzusammensetzung umfasst, die aus einer Mischung eines Kohlenwasserstoffharzes und eines in der Seitenkette kristallisierbaren Kohlenwasserstoffpolymers oder -copolymers besteht.

Der vorliegenden Erfindung liegt daher die Aufgabe zugrunde, Haftmittelzusammensetzungen bzw. Blockmittel bereitzustellen, welche sich insbesondere zur Fixierung von Brillenglasrohlingen auf sogenannten Blöcken bzw. Blockstücken eignen, welche die zuvor geschilderten Nachteile des Standes der Technik vermeiden oder aber wenigstens abschwächen.

Insbesondere liegt eine Aufgabe der vorliegenden Erfindung in der Bereitstellung von (Haftmittel-)Zusammensetzungen bzw. Blockmittelzusammensetzungen, welche eine Substitution der bislang verwendeten niedrigschmelzenden Metallegierungen ermöglichen sollen, wobei diesbezüglich eine hohe Klebefestigkeit zum Linsenrohling bzw. zum Blockstück, eine hohe innere Steifigkeit bei Raumtemperatur, eine hervorragende Aushärtbarkeit, insbesondere unter Vermeidung der Ausbildung von Schrumpfrissen bei der Aushärtung bzw. beim Abkühlen, und eine gute Formbeständigkeit während des Aushärtens und während der Linsenbearbeitung gewährleistet sein soll. Zudem soll das erfindungsgemäß bereitgestellte Haftmittel ein einfaches thermisches und/oder mechanisches Entblocken der Linse in einem geeigneten Temperaturbereich ermöglichen, welches nicht zu einer Beschädigung der Linse bzw. des Brillenglases führt. Zudem soll die erfindungsgemäß bereitgestellte Zusammensetzung rezyklierbar und wiederverwertbar sein. Insbesondere soll die erfindungsgemäß bereitgestellte Zusammensetzung kostengünstig sein. Zudem soll die Zusammensetzung nicht toxisch sein.

Zur Lösung der vorgenannten Aufgabe schlägt die vorliegende Erfindung - gemäß einem ersten Aspekt der vorliegenden Erfindung - eine Zusammensetzung, insbesondere Blockmittelzusammensetzung (Haftmittelzusammensetzung), gemäß Anspruch 1 vor. Weitere, vorteilhafte Ausgestaltungen sind Gegenstand der diesbezüglichen Unteransprüche.

Ein weiterer Gegenstand der vorliegenden Erfindung - gemäß einem zweiten Aspekt der vorliegenden Erfindung - ist das erfindungsgemäße Verfahren zur Fixierung von Rohlingen für ophthalmische und/oder optische Linsen auf einem Träger bzw. Blockstück gemäß Anspruch 10.

Wiederum ein weiterer Gegenstand der vorliegenden Erfindung - gemäß einem dritten Aspekt der vorliegenden Erfindung - ist der erfindungsgemäße Verbund gemäß Anspruch 11, welcher ein Blockstück und einen darauf unter Verwendung der erfindungsgemäßen Blockmittelzusammensetzung fixierten Rohling für ophthalmische bzw. optische Linsen umfaßt.

Zudem ist ein weiterer Gegenstand der vorliegenden Erfindung - gemäß einem vierten Aspekt der vorliegenden Erfindung - das erfindungsgemäße Verfahren zur Herstellung einer ophthalmischen bzw. optischen Linse gemäß Anspruch 12, wobei ein auf einem Träger bzw. Block unter Verwendung der erfindungsgemäßen Blockmittelzusammensetzung fixierter Rohling insbesondere maschinell zum Erhalt der ophthalmischen bzw. optischen Linse bearbeitet wird.

Weiterhin ist Gegenstand der vorliegenden Erfindung - gemäß einem fünften Aspekt der vorliegenden Erfindung - die erfindungsgemäße Verwendung der erfindungsgemäßen Zusammensetzung in der Herstellung von ophthalmischen und/oder optischen Linsen, vorzugsweise von kunststoffbasierten Brillengläsern gemäß Anspruch 13.

Schließlich ist ein weiterer Gegenstand der vorliegenden Erfindung - gemäß einem sechsten Aspekt der vorliegenden Erfindung - die erfindungsgemäße Verwendung der erfindungsgemäßen Zusammensetzung zur Fixierung eines Brillenglasrohlings auf einem Träger gemäß Anspruch 14.

Es versteht sich von selbst, daß im nachfolgenden solche Ausführungsformen und Schilderungen, welche nur zu einem einzelnen Aspekt der vorliegenden Erfindung genannt sind, gleichermaßen entsprechend auch für die anderen Aspekte der vorliegenden Erfindung gelten, ohne daß dies einer ausdrücklichen Erwähnung bedarf.

Bei allen nachstehend genannten relativen bzw. prozentualen gewichtsbezogenen Mengenangaben ist zu beachten, daß diese im Rahmen der erfindungsgemäßen Zusammensetzung vom Fachmann derart auszuwählen sind, daß sie sich in der Summe unter Einbeziehung sämtlicher Inhaltsstoffe, hierunter auch Additive, Vergütungsmittel oder dergleichen, insbesondere wie nachfolgend definiert, stets zu 100 Gew.-% ergänzen. Dies versteht sich für den Fachmann aber von selbst.

Im übrigen gilt, daß der Fachmann anwendungsbezogen oder einzelfallbedingt von den nachfolgend angeführten Mengenangaben abweichen kann, ohne daß er den Rahmen der vorliegenden Erfindung verläßt.

Weiterhin gilt für sämtliche nachfolgenden Parameter- und Werteangaben, daß diese mit für den Fachmann an sich wohlbekannten und üblichen Bestimmungsmethoden bestimmt werden können, insbesondere auf Basis einschlägiger Normen (wie DIN, DIN EN, ASTM, ISO etc.), welche auch in Ergänzung oder alternativ zu den nachfolgend genannten Normen eingesetzt werden können. Sofern im nachfolgenden keine speziellen Normen angegeben sind gilt, daß der Fachmann jederzeit in der Lage ist, die jeweilige Bestimmungsnorm vor dem Hintergrund der jeweiligen Parameter- bzw. Wertebestimmung entsprechend auszuwählen.

Beachtlich ist zudem, daß sich alle nachfolgenden Angaben hinsichtlich der mittleren Molmasse bzw. des mittleren Molekulargewichts auf das sogenannte gewichtsmittlere Molekulargewicht bzw. die gewichtsmittlere Molmasse beziehen.

Die Anmelderin hat nunmehr überraschenderweise herausgefunden, daß sich das zuvor geschilderte Problem bzw. die zuvor geschilderte Aufgabenstellung dadurch lösen läßt, daß man eine Blockmittelzusammensetzung bereitstellt, welche eine Mischung umfaßt, die (a) mindestens ein Polyol (Polyalkohol) und (b) mindestens einen organischen Polyester enthält.

Gegenstand der vorliegenden Erfindung - gemäß einem **ersten** erfindungsgemäßen Aspekt - ist somit eine Zusammensetzung, insbesondere Blockmittelzusammensetzung, insbesondere für die Fixierung von Rohlingen für ophthalmische und/oder optische Linsen, vorzugsweise kunststoffbasierten Brillenglasrohlingen, wobei die Zusammensetzung eine Mischung umfaßt, wobei die Mischung enthält:
(a) mindestens ein Polyol (Polyalkohol), wobei die Zusammensetzung das Polyol in Mengen von 20 bis 40 Gew.-%, bezogen auf die Zusammensetzung, enthält, und
(b) mindestens einen organischen Polyester, wobei die Zusammensetzung den organischen Polyester in Mengen von 50 bis 80 Gew.-%, bezogen auf die Zusammensetzung, enthält,
   wobei (b) der Polyester mindestens zwei voneinander verschiedene Polyester (b1) und (b2) umfaßt, wobei sich die mindestens zwei voneinander verschiedenen Polyester (b1) und (b2) in mindestens einem Parameter, ausgewählt aus der Gruppe von Molekulargewicht, Hydroxylzahl, Säurezahl, Erweichungspunkt, Glasübergangstemperatur, Schmelzbereich oder Schmelztemperatur, dynamischer Viskosität, Dichte und Kristallinität, voneinander unterscheiden,
   wobei (b1) der erste Polyester ein Molekulargewicht im Bereich von 1.500 bis 2.500 Da und (b2) der zweite Polyester ein Molekulargewicht im Bereich von 3.000 bis 4.000 Da aufweisen und
   wobei (b1) der erste Polyester und (b2) der zweite Polyester voneinander verschiedene dynamische Viskositäten aufweisen, wobei sich die dynamischen Viskositäten oberhalb des Schmelz- und/oder Glasübergangsbereichs in einem Temperaturbereich von 80 °C bis 130 °C um mindestens 500 mPa·s voneinander unterscheiden.

Eine Besonderheit der vorliegenden Erfindung ist somit insbesondere darin zu sehen, daß erfindungsgemäß eine Zusammensetzung, insbesondere Blockmittelzusammensetzung, bereitgestellt wird, welche durch die spezielle Kombination mindestens eines Polyols bzw. Polyalkohols einerseits und mindestens eines organischen Polyesters andererseits hervorragende Eigenschaften hinsichtlich ihrer Verwendung zur Fixierung von ophthalmischen bzw. optischen Linsenrohlingen bzw. Rohlingen von kunststoffbasierten Brillengläsern auf Trägern, wie Blockstücken, aufweist.

Die erfindungsgemäße Zusammensetzung eignet sich somit in hervorragender Weise als Blockmittel im Rahmen der Herstellung von insbesondere kunststoffbasierten Brillengläsern. In diesem Zusammenhang eignet sich die erfindungsgemäße Zusammensetzung gleichermaßen als hervorragender Ersatz für die im Stand der Technik bekannten Haftmittel, insbesondere auf Basis von Metallegierungen, wobei sich die erfindungsgemäße Zusammensetzung im besonderen Maße dadurch auszeichnet, daß sie nicht toxisch ist, da sie frei von jeglichen Schwermetallen ist.

Darüber hinaus zeichnet sich die erfindungsgemäße Zusammensetzung durch eine hervorragende Haftklebrigkeit aus, so daß eine gute und belastbare Klebverbindung zu dem zu fixierenden Rohling einerseits und dem Träger andererseits resultiert.

Ein weiterer zentraler Vorteil der erfindungsgemäßen Zusammensetzung ist darin zu sehen, daß sich die Zusammensetzung beim Aushärten bzw. bei der Verarbeitung des Rohlings nicht bzw. allenfalls nur geringfügig verformt, was zu einer hohen Qualität bzw. optischen Präzision des endfertigen Brillenglases führt, da der Rohling auch bei kraftmäßiger Beanspruchung im Rahmen von Bearbeitungsvorgängen (Zerspanen, Schleifen, Polieren etc.) gewissermaßen unbeweglich und fest mit dem Träger verbunden ist. Durch die hohe Haftfestigkeit bzw. Klebrigkeit der erfindungsgemäßen Blockmittelzusammensetzung kann der resultierende Verbund aus Träger, Blockmittel und Rohling somit den bei der Bearbeitung auftretenden hohen physikalischen Kräften widerstehen. Darüber hinaus neigt die erfindungsgemäße Zusammensetzung bei der Abkühlung bzw. beim Aushärten keine Tendenz zur Ausbildung von Schrumpfrissen auf.

Zudem ist der Erweichungs- bzw. Schmelzpunkt bzw. der Schmelzbereich der erfindungsgemäßen Zusammensetzung so gewählt, daß eine hohe Kompatibilität mit dem Rohling vorliegt und dieser durch die erwärmte und auf diese Weise in einen fließfähigen Zustand überführte Haftmasse bei der Befüllung des zuvor beschriebenen Hohlraumes nicht beschädigt wird.

Weiterhin zeichnet sich die erfindungsgemäße Zusammensetzung dadurch aus, daß sie ein einfaches Entblocken der Linse von dem Träger ermöglicht, was beispielsweise im Rahmen eines thermischen und/oder mechanischen Entblockens, d. h. Loslösung der bearbeiteten Linse bzw. des Brillenglases von dem Träger, erfolgen kann.

Hinsichtlich der Bearbeitung des fixierten Rohlings ist zudem beachtlich, daß die erfindungsgemäße Zusammensetzung selbst zerspanbar ist und somit gewissermaßen - insbesondere sofern auch der Block an sich zerspanbar hergestellt ist - eine Bearbeitung des Rohlings auch im Bereich der Verklebung erfolgen kann, was die verfahrenstechnische Handhabung deutlich vereinfacht, so daß auf diese Weise auch beispielsweise elipsenförmige Formgebungen des Rohlings realisiert werden können. Zudem wird durch die Eigenschaft, wonach die Blockmittelzusammensetzung nach der Erfindung selbst zerspanbar ist, ein "Ausfransen" bzw. ein Abbrechen von Kanten im Übergangsbereich zwischen Rohling einerseits und Haftmittel andererseits in effektiver Weise verhindert. Etwaig an dem Brillenglas verbleibende Reste können nach der Bearbeitung gleichermaßen leicht entfernt werden. Denn die erfindungsgemäßen Zusammensetzungen können in idealer Weise mechanisch von der Linse entfernt werden, wobei die erfindungsgemäßen Zusammensetzungen ohne größeren Aufwand rückstandsfrei von der Linse und dem Blockstück abgelöst werden können. Auch können abgelöste Materialpartikel der erfindungsgemäßen Zusammensetzung einfach und rückstandsfrei entfernt werden.

Ein weiterer zentraler Vorteil der erfindungsgemäßen Zusammensetzung ist darin zu sehen, daß diese rezyklierbar und wiederverwertbar ist und somit insbesondere für eine Vielzahl von Blockvorgängen eingesetzt werden kann.

Zudem ist die Zusammensetzung nach der Erfindung kostengünstig, was - in Ergänzung zu der hervorragenden Zerspanbarkeit der erfindungsgemäßen Zusammensetzung - eine vollständige Unterblockung des Rohlings auch aus Kostengründen erlaubt. Insbesondere kann auch eine vollständige Unterblockung von nichtplanar ausgebildeten Rohlingen erfolgen.

Nicht zuletzt zeichnet sich die vorliegende Erfindung dadurch aus, daß eine Blockmittelzusammensetzung bereitgestellt wird, welche hinsichtlich ihrer Herstellung problemlos ist und auf allgemein im Handel erhältliche Grundsubstanzen basiert, welche relativ kostengünstig sind, so daß es sich bei der erfindungsgemäßen Zusammensetzung auch hinsichtlich der Kostenoptimierung um ein hervorragendes Produkt handelt. Weiterhin ist auch für den Kostenaspekt beachtlich, daß die erfindungsgemäße Zusammensetzung ohne weiteres rezykliert werden kann und für eine Vielzahl an aufeinanderfolgenden Fixiervorgängen eingesetzt werden kann.

Im Ergebnis wird somit eine erfindungsgemäße Zusammensetzung bereitgestellt, die neben hervorragenden Klebeeigenschaften und rheologischen Eigenschaften zudem thermisch stabil und auch gesundheitlich unbedenklich ist.

Ein weiterer Vorteil der erfindungsgemäßen Zusammensetzung ist darin zu sehen, daß die Zusammensetzung auf einfache Weise hergestellt werden kann. So kann die Herstellung beispielsweise im Rahmen von dem Fachmann an sich wohlbekannten Mischvorgängen unter Erwärmung der Substanzen erfolgen, wobei diesbezüglich insbesondere eine homogene Durchmischung der Inhaltsstoffe durchgeführt wird. Dabei sind die Reihenfolge der Zugabe sowie die Temperaturfolge im Rahmen der Herstellung der erfindungsgemäßen Zusammensetzung zumindest im wesentlichen unkritisch.

Um eine besonders gute Fixierung des Rohlings zu ermöglichen, ist es gemäß einer erfindungsgemäß besonders bevorzugten Ausführungsform vorgesehen, daß die Zusammensetzung nach der Erfindung thermoplastisch ist. Gleichermaßen kann es vorgesehen sein, daß die erfindungsgemäße Zusammensetzung hitzeklebrig ausgebildet ist. Dies führt zu einer guten Verarbeitung (Verfüllen des Hohlraums unter oder nach erfolgter Erwärmung) sowie zu einer hervorragenden Klebrigkeit der Zusammensetzung.

Zudem kann es im Rahmen der vorliegenden Erfindung vorgesehen sein, daß die Zusammensetzung einen Schmelzbereich oder eine Schmelztemperatur im Bereich von 50 bis 120 °C, insbesondere 55 bis 110 °C, vorzugsweise 60 bis 100 °C, bevorzugt 60 bis 90 °C, besonders bevorzugt 65 bis 85 °C, aufweist. Die Schmelztemperatur bzw. der Schmelzbereich kann mit dem Fachmann an sich wohlbekannten Verfahren bestimmt werden, beispielsweise mittels differentialkalorimetrischen Methoden, z. B. auf Basis der DIN ISO 3146 (insbesondere Verfahren C). Aufgrund der gezielten Einstellung des Schmelzbereiches bzw. der Schmelztemperatur ist gewährleistet, daß der Rohling, welcher insbesondere auf Kunststoffbasis ausgebildet ist bzw. aus Kunststoff besteht, als solcher nicht thermisch beschädigt wird, insbesondere wenn die erwärmte und auf diese Weise in einen fließfähigen Zustand überführte Haftmasse in den Hohlraum zwischen Rohling und Träger eingefüllt wird.

In diesem Zusammenhang sollte die Zusammensetzung nach der Erfindung oberhalb des Schmelzbereiches oder der Schmelztemperatur, insbesondere oberhalb einer Temperatur von 60 °C bis 100 °C, fließfähig sein. Weiterhin sollte die Zusammensetzung oberhalb des Schmelzbereiches oder der Schmelztemperatur, insbesondere bei einer Temperatur von 60 bis 100 °C, eine dynamische Viskosität im Bereich von 100 bis 50.000 mPa·s, insbesondere 250 bis 30.000 mPa·s, vorzugsweise 500 bis 25.000 mPa·s, bevorzugt 750 bis 20.000 mPa·s, besonders bevorzugt 1.000 bis 18.000 mPa·s, aufweisen. Insbesondere weist die Zusammensetzung nach der Erfindung eine dynamische Viskosität im Bereich von 5.000 bis 30.000 mPa·s, insbesondere 10.000 bis 20.000 mPa·s, bei einer Temperatur von 65 °C, und/oder im Bereich von 4.000 bis 20.000 mPa·s, insbesondere 5.000 bis 15.000 mPa·s, bei einer Temperatur von 70 °C, und/oder im Bereich von 2.000 bis 15.000 mPa·s, insbesondere 3.000 bis 12.000 mPa·s, bei einer Temperatur von 75 °C und/oder im Bereich von 100 bis 5.000 mPa·s, insbesondere 250 bis 3.000 mPa·s, bei einer Temperatur von 130 °C auf. Hierdurch wird eine gute Verfüllbarkeit des zwischen Träger und Rohling vorhandenen Hohlraumes ermöglicht, wobei gleichzeitig die Ausbildung von Restleerräumen bzw. Luftblasen effektiv verhindert wird. Zudem ist die Füllgeschwindigkeit erhöht, was hohe Durchsätze ermöglicht. Die Viskosität kann auf Basis von dem Fachmann an sich wohlbekannten Verfahren bestimmt werden, beispielsweise auf Basis eines Verfahrens unter Verwendung paralleler Platten. Beispielsweise kann die Viskosität der Zusammensetzung nach der Erfindung auf Basis der DIN 53019 bestimmt werden.

Was die erfindungsgemäße Zusammensetzung weiterhin anbelangt, so sollte diese eine Dichte p, bestimmt bei einer Temperatur von 20 °C, im Bereich von 0,9 bis 1,5 g/cm³, insbesondere 1 bis 1,4 g/cm³, vorzugsweise 1,1 bis 1,3 g/cm³, bevorzugt 1,2 g/cm³, aufweisen. Die Dichte kann beispielsweise auf Basis der DIN 51757 bestimmt werden.

Die vorgenannten insbesondere physikalischen Parameter der erfindungsgemäßen Zusammensetzung führen insbesondere zu einer hervorragenden Anwendbarkeit bzw. Handhabung im Rahmen der Fixierung von Brillenglasrohlingen bzw. Rohlingen für optische Linsen, insbesondere da das Fließverhalten bzw. die rheologischen Eigenschaften sowie das Schmelzverhalten im Hinblick auf den zu fixierenden Rohling und die Verfüllung des Hohlraums optimiert sind.

Wie zuvor angeführt, weist die erfindungsgemäße Zusammensetzung mindestens ein Polyol auf, wobei es sich hierbei im allgemeinen um eine organische Verbindung handelt, welche mehrere Hydroxylgruppen, insbesondere eine Vielzahl von Hydroxylgruppen, aufweist. Insbesondere handelt es sich bei dem Polyol um ein amorphes Polyol.

Im Rahmen der vorliegenden Erfindung werden hinsichtlich der vorgenannten Eigenschaften der Zusammensetzung nach der Erfindung besonders gute Ergebnisse erhalten, wenn die Zusammensetzung (a) das Polyol in Mengen von 25 bis 35 Gew.-%, bezogen auf die Zusammensetzung, enthält.

Das erfindungsgemäß für die Zusammensetzung eingesetzte (a) Polyol sollte eine Hydroxylzahl im Bereich von 350 bis 600 mg KOH/g, insbesondere 400 bis 550 mg KOH/g, vorzugsweise 425 bis 525 mg KOH/g, bevorzugt 450 bis 550 mg KOH/g, aufweisen. Die Hydroxylzahl kann beispielsweise auf Basis der DIN 53240 bzw. DIN 53240-2 bestimmt werden.

Gleichermaßen ist es von Vorteil, wenn (a) das Polyol eine Säurezahl im Bereich von 1 bis 15 mg KOH/g, insbesondere 2 bis 12 mg KOH/g, vorzugsweise 5 bis 10 mg KOH/g, aufweist und/oder wenn (a) das Polyol eine Säurezahl von höchstens 15 mg KOH/g, insbesondere höchstens 12 mg KOH/g, vorzugsweise höchstens 10 mg KOH/g, aufweist. Die Säurezahl kann z. B. gemäß der DIN 53402 bzw. der DIN EN ISO 2114 bestimmt werden.

Zudem kann es erfindungsgemäß vorgesehen sein, daß (a) das Polyol ein Hydroxyläquivalentgewicht von 100 bis 135, insbesondere 105 bis 130, vorzugsweise 110 bis 125, bevorzugt 112 bis 125, aufweist.

Um die Fließeigenschaften bzw. die rheologischen Eigenschaften der erfindungsgemäßen Zusammensetzung weiter zu verbessern, kann es erfindungsgemäß vorgesehen sein, daß (a) das Polyol eine Brookfield-Viskosität von 1.000 bis 3.500 mPa·s, insbesondere 1.500 bis 3.000 mPa·s, vorzugsweise 1.700 bis 2.500 mPa·s, bei einer Temperatur von 25 °C und bei 70 % in Propylenglykolmonomethyletheracetat (PM-Acetat), aufweist.

Weiterhin kann es erfindungsgemäß vorgesehen sein, daß (a) das Polyol einen Schmelzbereich oder eine Schmelztemperatur im Bereich von 10 bis 120 °C, insbesondere 20 bis 100 °C, vorzugsweise 30 bis 90 °C, bevorzugt 40 bis 80 °C, besonders bevorzugt 50 bis 60 °C, aufweist, wobei diesbezüglich gleichermaßen differentialkalorimetrische Verfahren eingesetzt werden können, wie zuvor beschrieben.

Die Eigenschaften der erfindungsgemäßen Zusammensetzung hinsichtlich ihres erfindungsgemäß vorgesehenen Einsatzes als Blockmittelzusammensetzung zur Fixierung von Rohlingen für optische Linsen bzw. für Brillengläser können dadurch weiter verbessert werden, daß hinsichtlich der erfindungsgemäßen Zusammensetzung ein sehr spezielles Polyol eingesetzt ist:

So kann es erfindungsgemäß vorgesehen sein, daß (a) das Polyol das Reaktionsprodukt von Bisphenol-A-Epoxid einerseits und Dimethylolpropionsäure andererseits ist. Dabei sollte (a) das Polyol mindestens zwei Bisphenol-A-Einheiten, vorzugsweise zwei Bisphenol-A-Einheiten, und mindestens eine Dimethylolpropionsäure-Einheit, vorzugsweise mindestens zwei Dimethylolpropionsäure-Einheiten, aufweisen.

Somit kann es erfindungsgemäß vorgesehen sein, daß (a) das Polyol von Bisphenol-A und Dimethylolpropionsäure abgeleitete Einheiten aufweist oder vorzugsweise hieraus besteht.

Gemäß einer erfindungsgemäß besonders bevorzugten Ausführung kann es zudem vorgesehen sein, daß (a) das Polyol die nachfolgende Formel aufweist:

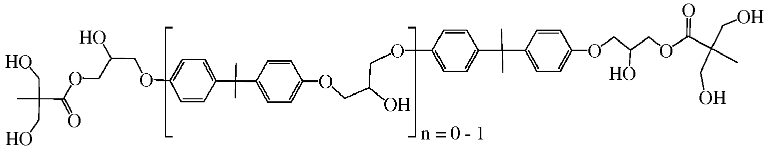

Denn die Anmelderin hat in völlig überraschender Weise herausgefunden, daß die Verwendung eines derart speziellen Polyols sich besonders positiv auf die gewünschten Eigenschaften der erfindungsgemäßen Zusammensetzung im Hinblick auf die Fixierung von Rohlingen für Brillengläser auswirkt. Beispielsweise werden durch den Einsatz des speziellen Polyols nicht nur die rheologischen Eigenschaften verbessert, sondern auch die Haftklebrigkeit, was insbesondere auf die hohe Anzahl und spezielle Anordnung von Hydroxylgruppen im Molekül - ohne sich auf diese Theorie beschränken zu wollen - zurückgeführt werden kann.

Im folgenden wird nun auf die zweite Komponente der für die erfindungsgemäße Zusammensetzung eingesetzten Mischung, nämlich den mindestens einen organischen Polyester, eingegangen:
Im Hinblick auf den organischen Polyester sollte die Zusammensetzung nach der Erfindung den (b) organischen Polyester in Mengen von 60 bis 80 Gew.-%, bevorzugt 65 bis 75 Gew.-%, bezogen auf die Zusammensetzung, enthalten.

Wie nachfolgend noch ausführlich angeführt wird, ist es erfindungsgemäß vorgesehen, daß die Polyesterkomponente mindestens zwei voneinander verschiedene Polyester bzw. Copolyester enthält, insbesondere wobei einer der eingesetzten Polyester bzw. Copolyester amorph ausgebildet und der andere Polyester bzw. Copolyester teilkristallin bzw. kristallin ausgebildet ist.

Wie zuvor angeführt, ist es erfindungsgemäß vorgesehen, daß die erfindungsgemäße Blockmittelzusammensetzung derart konzipiert ist, daß (b) der Polyester bzw. die Polyesterkomponente der erfindungsgemäßen Zusammensetzung mindestens zwei voneinander verschiedene Polyester (b1) und (b2) umfaßt. Auf Basis dieser erfindungsgemäßen Konzeption ist es nämlich in völlig überraschender Weise gelungen, die Anwendungseigenschaften der erfindungsgemäßen Zusammensetzung zur Fixierung von kunststoffbasierten Brillenglasrohlingen weiter zu verbessern, beispielsweise im Hinblick auf Fließeigenschaften, Schmelzeigenschaften sowie in bezug auf das Klebeverhalten.

In diesem Zusammenhang ist es erfindungsgemäß vorgesehen, daß sich die mindestens zwei voneinander verschiedenen Polyester (b1) und (b2) in mindestens einem Parameter, insbesondere ausgewählt aus der Gruppe von Molekulargewicht, Hydroxylzahl, Säurezahl, Erweichungspunkt, Glasübergangstemperatur, Schmelzbereich oder Schmelztemperatur, dynamischer Viskosität und Dichte, voneinander unterscheiden.

In diesem Zusammenhang ist es erfindungsgemäß von Vorteil, wenn die mindestens zwei voneinander verschiedenen Polyester (b1) und (b2) in dem sie unterscheidenden Parameter um mindestens 2 %, insbesondere mindestens 5 %, vorzugsweise mindestens 10 %, bevorzugt mindestens 15 %, voneinander abweichen, bezogen auf den zahlenmäßig kleineren Wert des die Polyester (b1) und (b2) unterscheidenden Parameter. Die zuvor angeführte Maßgabe hinsichtlich der unterschiedlichen Ausbildung jeweiliger Parameter kann in nichtbeschränkender Weise und lediglich beispielhaft auf Basis des Molekulargewichtes beschrieben werden: Wenn beispielsweise (b1) der erste Polyester ein Molekulargewicht von 2.000 Da aufweist, ist es im Rahmen der vorliegenden Erfindung von Vorteil, wenn (b2) der zweite Polyester ein hiervon um mindestens 2 %, insbesondere mindestens 5 %, vorzugsweise mindestens 10 %, bevorzugt mindestens 15 %, abweichendes Molekulargewicht aufweist. Im konkreten Fall bedeutet dies, daß (b2) der zweite Polyester unter der Voraussetzung, daß (b1) der erste Polyester ein Molekulargewicht von 2.000 Da aufweist, ein entsprechendes Molekulargewicht von mindestens 2.040 Da, insbesondere mindestens 2.100 Da, vorzugsweise mindestens 2.200 Da, bevorzugt mindestens 2.300 Da, aufweist.

Gemäß einer Ausführungsform kann es vorgesehen sein, daß (b1) der erste Polyester und (b2) der zweite Polyester sich in ihrer Kristallinität unterscheiden.

Dabei kann es vorgesehen sein, daß (b1) der erste Polyester ein amorpher Polyester, insbesondere ein amorpher Copolyester, oder ein teilkristalliner Polyester, insbesondere ein teilkristalliner Copolyester, ist und/oder daß (b2) der zweite Polyester ein teilkristalliner oder kristalliner, vorzugsweise ein teilkristalliner Polyester, insbesondere ein teilkristalliner oder kristalliner, vorzugsweise ein teilkristalliner Copolyester, ist. Sofern sowohl (b1) als auch (b2) teilkristallin oder kristallin ausgebildet sind, können sich die Kristallinitätsgrade von (b1) und (b2) insbesondere um mindestens 2 %, vorzugsweise um mindestens 5 %, besonders bevorzugt um mindestens 10 %, unterscheiden.

Insbesondere ist es erfindungsgemäß auch bevorzugt, wenn ein amorpher Polyester mit einem teilkristallinen Polyester kombiniert wird: So kann es erfindungsgemäß vorgesehen sein, daß (b1) der erste Polyester ein amorpher Polyester, insbesondere ein amorpher Copolyester, ist. In diesem Zusammenhang kann (b2) der zweite Polyester ein teilkristalliner oder kristalliner, vorzugsweise ein teilkristalliner Polyester, insbesondere ein teilkristalliner oder kristalliner, vorzugsweise ein teilkristalliner Copolyester, sein. In diesem Zusammenhang sollte der Kristallinitätsgrad des (b2) zweiten Polyesters mindestens 10 %, insbesondere mindestens 15 %, vorzugsweise mindestens 20 %, bevorzugt mindestens 25 %, betragen.

Darüber hinaus kann es erfindungsgemäß vorgesehen sein, daß (b1) der erste Polyester ein teilkristalliner Polyester, insbesondere ein teilkristalliner Copolyester, ist. Denn auch diesbezüglich werden hinsichtlich der erfindungsgemäßen Blockmittelzusammensetzungen gute Ergebnisse erhalten. Diesbezüglich sollte der Kristallinitätsgrad des (b1) ersten Polyesters mindestens 10 %, insbesondere mindestens 15 %, vorzugsweise mindestens 20 %, bevorzugt mindestens 25 %, betragen. In diesem Zusammenhang kann es erfindungsgemäß somit vorgesehen sein, daß (b1) der erste Polyester einen teilkristallinen Anteil aufweist bzw. teilkristallin ist, wobei es für diesen Fall zudem vorgesehen sein kann, daß der Kristallinitätsgrad des (b1) ersten Polyesters vorzugsweise geringer ist als der Kristallinitätsgrad des (b2) zweiten Polyesters. Schließlich kommt auch für (b1) den ersten Polyester der Einsatz eines kristallinen Polyesters bzw. Copolyesters in Betracht.

Was die erste Polyesterkomponente anbelangt, so sollte die erfindungsgemäße Zusammensetzung (b1) den ersten Polyester in Mengen von 1 bis 70 Gew.-%, insbesondere 1 bis 60 Gew.-%, vorzugsweise 1 bis 50 Gew.-%, bevorzugt 2 bis 40 Gew.-%, besonders bevorzugt 5 bis 35 Gew.-%, ganz besonders bevorzugt 10 bis 30 Gew.-%, noch weiter bevorzugt 20 Gew.-%, bezogen auf die Zusammensetzung, enthalten.

Was die zweite Polyesterkomponente anbelangt, so sollte die erfindungsgemäße Zusammensetzung (b2) den zweiten Polyester in Mengen von 5 bis 70 Gew.-%, insbesondere 10 bis 70 Gew.-%, vorzugsweise 20 bis 70 Gew.-%, bevorzugt 30 bis 70 Gew.-%, besonders bevorzugt 35 bis 65 Gew.-%, ganz besonders bevorzugt 40 bis 60 Gew.-%, noch weiter bevorzugt 50 Gew.-%, bezogen auf die Zusammensetzung, enthalten.

In diesem Zusammenhang ist es von Vorteil, wenn die Zusammensetzung (a) den Polyol in einer Menge von etwa 30 Gew.-% enthält, sofern die erste Polyesterkomponente (b1) in einer Menge von etwa 20 Gew.-% und die zweite Polyesterkomponente (b2) in einer Menge von etwa 50 Gew.-% eingesetzt ist.

Im Rahmen der Verwendung als Blockmittelzusammensetzung hat es sich als besonders vorteilhaft herausgestellt, das Mengenverhältnis zwischen der ersten Polyesterkomponente (b1) und der zweiten Polyesterkomponente (b2) entsprechend der nachfolgenden Maßgabe auszugestalten: So ist es vorteilhaft, wenn die erfindungsgemäße Zusammensetzung (b1) den ersten Polyester und (b2) den zweiten Polyester in einem gewichtsbezogenen Mengenverhältnis von [(b1) : (b2)] oder von [(b2) : (b1)] im Bereich von 2 : 1 bis 1 : 8, insbesondere 1,5 : 1 bis 1 : 7, vorzugsweise 1 : 1 bis 1 : 6, bevorzugt 1 : 1 bis 1 : 4, besonders bevorzugt 1:1 bis 1 : 3, ganz besonders bevorzugt 1 : 2,5, enthält.

Auch das Mengenverhältnis in bezug auf (a) die Polyolkomponente spielt erfindungsgemäß eine wichtige Rolle: So kann es im Rahmen der vorliegenden Erfindung vorgesehen sein, daß die erfindungsgemäße Zusammensetzung (a) den Polyol, (b1) den ersten Polyester und (b2) den zweiten Polyester in einem gewichtsbezogenen Mengenverhältnis von [(a): (b1) : (b2)] oder von [(a) : (b2) : (b1)] im Bereich von [0,2 bis 6] : [0,1 bis 5] : [0,3 bis 15], insbesondere [0,5 bis 3] : [0,3 bis 2] : [0,8 bis 8], vorzugsweise 1,5 : 1 : 2,5, enthält.

Was die mindestens zwei voneinander verschiedenen Polyester anbelangt, so weist (b1) der erste Polyester ein Molekulargewicht im Bereich von 1.500 bis 2.500 Da, insbesondere 1.800 bis 2.300 Da, vorzugsweise von 2.000 Da, auf und/oder weist (b2) der zweite Polyester ein Molekulargewicht im Bereich von 3.000 bis 4.000 Da, insbesondere 3.300 bis 3.800 Da, vorzugsweise von 3.500 Da, auf.

In diesem Zusammenhang sollte zudem (b1) der erste Polyester eine Hydroxylzahl im Bereich von 45 bis 65 mg KOH/g, insbesondere 50 bis 60 mg KOH/g , aufweisen und/oder (b2) der zweite Polyester eine Hydroxylzahl im Bereich von 20 bis 40 mg KOH/g, insbesondere 27 bis 34 mg KOH/g, aufweisen.

Im Rahmen der vorliegenden Erfindung ist es auch von Vorteil, wenn (b1) der erste Polyester eine Säurezahl im Bereich von 5 bis 15 mg KOH/g, insbesondere 6 bis 14 mg KOH/g, vorzugsweise 8 bis 12 mg KOH/g, aufweist und/oder wenn (b1) der erste Polyester eine Säurezahl von höchstens 15 mg KOH/g, insbesondere höchstens 14 mg KOH/g, vorzugsweise höchstens 12 mg KOH/g, aufweist und/oder wenn (b2) der zweite Polyester eine Säurezahl im Bereich von 1 bis 4 mg KOH/g, insbesondere 1 bis 3 mg KOH/g, vorzugsweise 1 bis 2 mg KOH/g, aufweist und/oder wenn (b2) der zweite Polyester eine Säurezahl von höchstens 4 mg KOH/g, insbesondere höchstens 3 mg KOH/g, vorzugsweise höchstens 2 mg KOH/g, aufweist.

Was die erste Polyesterkomponente einerseits und die zweite Polyesterkomponente in der erfindungsgemäßen Zusammensetzung weiterhin anbelangt, so kann (b1) der erste Polyester einen Erweichungspunkt nach Ring und Kugel im Bereich von 45 bis 55 °C, insbesondere 50 bis 54 °C, vorzugsweise von etwa 53 °C, aufweisen und/oder (b2) der zweite Polyester einen Erweichungspunkt nach Ring und Kugel im Bereich von 58 bis 70 °C, insbesondere 60 bis 65 °C, vorzugsweise von etwa 63 °C, aufweisen.

Der (b1) erste Polyester kann eine Glasübergangstemperatur im Bereich von 0 bis 20 °C, insbesondere 5 bis 15 °C, vorzugsweise von etwa 10 °C, aufweisen. In diesem Zusammenhang sollte (b2) der zweite Polyester eine Glasübergangstemperatur im Bereich von -70 bis -50 °C, insbesondere -65 bis -55 °C, vorzugsweise von etwa -60 °C, aufweisen.

Gemäß einer erfindungsgemäß bevorzugten Ausführungsform kann es vorgesehen sein, daß (b2) der zweite Polyester, insbesondere verschieden von dem ersten Polyester (b1), einen Schmelzbereich oder eine Schmelztemperatur im Bereich von 45 bis 65 °C, insbesondere 50 bis 60 °C, vorzugsweise von 55 °C, aufweist.

Im Rahmen der vorliegenden Erfindung werden besonders gute Ergebnisse erhalten, wenn (b1) der erste Polyester und (b2) der zweite Polyester voneinander verschiedene Viskositäten, insbesondere dynamische Viskositäten, aufweisen.

In diesem Zusammenhang ist es erfindungsgemäß vorgesehen, daß sich die Viskositäten, insbesondere die dynamischen Viskositäten, oberhalb des Schmelz- und/oder Glasübergangsbereichs in einem Temperaturbereich von 80 °C bis 130 °C um mindestens 500 mPa·s, vorzugsweise um mindestens 1.000 mPa·s, bevorzugt um mindestens 5.000 mPa·s, besonders bevorzugt um mindestens 10.000 mPa·s, voneinander unterscheiden.

Gleichermaßen kann es erfindungsgemäß vorgesehen sein, daß sich die Viskositäten, insbesondere die dynamischen Viskositäten, oberhalb des Schmelz- und/oder Glasübergangsbereichs in einem Temperaturbereich von 80 °C bis 130 °C in einem Bereich von 500 bis 10.000 mPa·s, insbesondere 500 bis 8.000 mPa·s, vorzugsweise 500 bis 6.000 mPa·s, bevorzugt 1.000 bis 5.000 mPa·s, voneinander unterscheiden.

Weiterhin ist es erfindungsgemäß möglich, daß der erste Polyester oberhalb des Schmelz- und/oder Glasübergangsbereichs in einem Temperaturbereich von 80 °C bis 130 °C eine geringere Viskosität, insbesondere eine geringere dynamische Viskosität, als (b2) der zweite Polyester aufweist.

So kann es im Rahmen der Erfindung vorgesehen sein, daß (b1) der erste Polyester oberhalb des Schmelz- und/oder Glasübergangsbereichs, insbesondere in einem Temperaturbereich von 80 °C bis 130 °C, eine Viskosität, insbesondere dynamische Viskosität, in einem Bereich von 100 bis 10.000 mPa·s, insbesondere 200 bis 8.000 mPa·s, vorzugsweise 500 bis 5.000 mPa·s, aufweist.

Zudem kann es erfindungsgemäß vorgesehen sein, daß (b2) der zweite Polyester oberhalb des Schmelz- und/oder Glasübergangsbereichs, insbesondere in einem Temperaturbereich von 80 °C bis 130 °C, eine Viskosität, insbesondere dynamische Viskosität, in einem Bereich von 1.000 bis 50.000 mPa·s, insbesondere 2.000 bis 30.000 mPa·s, vorzugsweise 5.000 bis 25.000 mPa·s, aufweist.

Weiterhin kann (b1) der erste Polyester, gemessen bei einer Temperatur von 130 °C, eine dynamische Viskosität im Bereich von 500 bis 2.000 mPa·s, insbesondere 750 bis 1.500 mPa·s, vorzugsweise von etwa 1.000 mPa·s, aufweisen. In diesem Zusammenhang sollte (b2) der zweite Polyester, gemessen bei einer Temperatur von 80 °C, eine dynamische Viskosität im Bereich von 1.500 bis 2.500 mPa·s, insbesondere 1.750 bis 2.200 mPa·s, vorzugsweise von etwa 2.000 mPa·s, aufweisen.

Schließlich kann es hinsichtlich der ersten Polyesterkomponente und der zweiten Polyesterkomponente in einer spezifischen Abstimmung aufeinander vorgesehen sein, daß (b1) der erste Polyester eine Dichte p, bestimmt bei einer Temperatur von 23 °C, im Bereich von 1,04 bis 1,12 g/cm³, insbesondere 1,06 bis 1,1 g/cm³, vorzugsweise von etwa 1,08 g/cm³, aufweist und/oder daß (b2) der zweite Polyester eine Dichte p, bestimmt bei einer Temperatur von 23 °C, im Bereich von 1,12 bis 1,2 g/cm³, insbesondere 1,14 bis 1,18 g/cm³, vorzugsweise von etwa 1,16 g/cm³, aufweist.

Auf Basis der zweckgerichteten und speziellen Abstimmung der mindestens zwei voneinander verschiedenen Polyesterkomponenten (b1) und (b2) in der erfindungsgemäßen Zusammensetzung, insbesondere auch im Hinblick mit der Polyolkomponente (a), können die Eigenschaften der erfindungsgemäßen Zusammensetzung noch weiter verbessert werden.

Wie zuvor ausgeführt, ist die vorliegende Erfindung ist nicht auf den Einsatz der zuvor beschriebenen Polyesterkomponenten (b1) und/oder (b2) beschränkt, vielmehr können auch weitere Polyesterkomponenten (b3), (b4), (b5) der erfindungsgemäßen Zusammensetzung mit unterschiedlichen Parametern gemäß der obigen Maßgabe eingesetzt werden.

Beispielsweise kann die erfindungsgemäße Zusammensetzung gegebenenfalls in Kombination mit den obigen Polyestern eine spezielle Polyesterkomponente (b3) aufweisen, welche, gemessen bei 23 °C, eine Dichte von etwa 1,16 g/cm³, eine Viskosität bei 80 °C von etwa 15.000 mPa·s, ein Molekulargewicht von etwa 8.500 Da, eine Gesamtsäurezahl von höchstens 2, einen Schmelzpunkt von etwa 57 °C, einen Erweichungspunkt von etwa 65 °C und eine Glasübergangstemperatur von etwa -60 °C sowie eine Hydroxylzahl von etwa 10 bis 16 mg KOH/g aufweist. Eine derartige Polyesterkomponente (b3) kann beispielsweise in Mengen von 5 bis 30 Gew.-%, bezogen auf die Zusammensetzung, eingesetzt werden.

Gleichermaßen kann die Zusammensetzung eine spezielle Polyesterkomponente (b4) enthalten, welche eine Dichte von etwa 1,16 g/cm³, gemessen bei 23 °C, eine Viskosität, gemessen bei 80 °C, von etwa 10.000 mPa·s, ein Molekulargewicht von etwa 6.500 Da, einen Schmelzpunkt von etwa 57 °C, einen Erweichungspunkt von etwa 63 °C und eine Glasübergangstemperatur von etwa -60 °C sowie eine Hydroxylzahl von etwa 14 bis 20 mg KOH/g aufweist. Eine derartige Polyesterkomponente (b4) kann beispielsweise in Mengen von 5 bis 30 Gew.-%, bezogen auf die Zusammensetzung, eingesetzt sein.

Zudem kann die erfindungsgemäße Zusammensetzung eine spezielle Polyesterkomponente (b5) aufweisen, welche eine Dichte, gemessen bei 23 °C, von etwa 1,23 g/cm³, eine Viskosität, gemessen bei 130 °C, von etwa 10.000 mPa·s, ein Molekulargewicht von etwa 3.000 Da, eine Gesamtsäurezahl von höchstens 2, ein Erweichungspunkt von etwa 76 °C, eine Glasübergangstemperatur von etwa 30 °C sowie eine Hydroxylzahl von etwa 31 bis 39 aufweist. Eine solche Polyesterkomponente (b5) kann in Mengen von 5 bis 40 Gew.-%, bezogen auf die Zusammensetzung, eingesetzt werden.

Weiterhin kann die Zusammensetzung nach der Erfindung auch mindestens ein Polyesterpolyol enthalten, insbesondere mit einer Säurezahl von höchstens 0,6 und insbesondere in Mengen von 1 bis 15 Gew.-%, bezogen auf die Zusammensetzung.

Weiterhin kann die erfindungsgemäße Zusammensetzung optional außerdem mindestens ein Wachs enthalten, insbesondere wobei das Wachs eine Mischung aus Estern, Wachssäuren und Alkoholen umfaßt, insbesondere in Mengen von 1 bis 50 Gew.-%, insbesondere 5 bis 45 Gew.-%, vorzugsweise 10 bis 40 Gew.-%, bezogen auf die Zusammensetzung.

In diesem Zusammenhang sollte das Wachs einen Schmelzbereich oder eine Schmelztemperatur im Bereich von 50 bis 120 °C, insbesondere 55 bis 110 °C, vorzugsweise 60 bis 100 °C, bevorzugt 70 bis 95 °C, aufweisen.

Schließlich kann die erfindungsgemäße Zusammensetzung außerdem mindestens einen weiteren Inhaltsstoff und/oder mindestens ein Additiv und/oder mindestens ein Vergütungsmittel enthalten, insbesondere ausgewählt aus der Gruppe von Alterungsinhibitoren, Konservierungsmitteln, Antioxidantien, Stabilisatoren, Füllstoffen, insbesondere anorganischen Partikeln, Rheologiestellmitteln, Dispergiermitteln, Netzmitteln, Wärmetransfermitteln, Weichmachern, Haftvermittlern, Verschnittmitteln, Lösemitteln, Lösungsvermittlern, Entschäumern, Emulgatoren, Kristallisationsbeschleuniger und Substanzen zur Verhinderung der Hydrolyse und/oder Wasseraufnahme, insbesondere in Mengen von jeweils 0,001 bis 60 Gew.-%, insbesondere 0,01 bis 40 Gew.-%, vorzugsweise 0,1 bis 10 Gew.-%, bezogen auf die Zusammensetzung.

Ein weiterer Gegenstand der vorliegenden Erfindung - gemäß einem **zweiten** Aspekt der vorliegenden Erfindung - ist ein Verfahren zur Fixierung von Rohlingen für ophthalmische und/oder optische Linsen, vorzugsweise von kunststoffbasierten Brillenglasrohlingen, wobei
(a) zunächst der Rohling über oder seitlich zu einem Träger, insbesondere einem Blockstück, angeordnet wird derart, daß die zu bearbeitende Seite und/oder Fläche des Rohlings vom Träger abgewandt ist und derart, daß zwischen dem Träger einerseits und dem Rohling andererseits, gegebenenfalls unter Verwendung mindestens eines Dichtmittels, ein verfüllbarer Hohlraum resultiert;
(b) anschließend der Hohlraum mit einer vorzugsweise durch Erwärmung verflüssigten und/oder in einen fließfähigen Zustand überführten Zusammensetzung, wie zuvor definiert, zumindest im wesentlichen vollständig verfüllt wird; und
(c) nachfolgend die Zusammensetzung vorzugsweise durch Abkühlung zum Erhalt eines Verbundes, aufweisend den Träger mit dem darauf mittels der Zusammensetzung fixierten Rohling, ausgehärtet und/ oder verfestigt wird.

Im Rahmen des erfindungsgemäßen Verfahrens kann es vorgesehen sein, daß die zu fixierende Seite bzw. der zu fixierende Abschnitt des Rohlings zusätzlich mit einer Schutz- bzw. Haftfolie ausgerüstet ist, welche dann entsprechend mit der Haftmasse verbunden wird. Hierdurch kann der Rohling noch weiterführend geschützt werden. Die diesbezügliche Verfahrensführung ist dem Fachmann im Detail bekannt, so daß es diesbezüglich keiner weiteren Ausführungen bedarf. Im allgemeinen kann der Rohling in bezug auf die zu verklebende Seite vollflächig oder abschnittsweise, vorzugsweise abschnittsweise, verklebt werden.

Was den Träger bzw. den Block anbelangt, so kann dieser im allgemeinen ein- bzw. mehrteilig ausgebildet sein.

Als Dichtmittel kommt beispielsweise eine abdichtende Begrenzung, wie ein Blockring, in Frage. Das Dichtmittel kann dabei auch derart angeordnet werden, daß zumindest Abschnitte des Dichtmittels den Brillenglasrohling und/oder den Block seitlich umfassen bzw. seitlich über den Rand des Rohlings und/oder Blockes hinausgehen.

Im Rahmen des erfindungsgemäßen Verfahrens kann auch derart vorgegangen werden, daß der Träger oder der Rohling zunächst mit dem Haftmittel bzw. der Blockmittelzusammensetzung versehen wird und das Haftmittel auf dem Träger zur Aushärtung gebracht wird, insbesondere unter Einsatz eines Dichtmittels, wie eines Blockrings oder dergleichen, zur Ausbildung eines verfüllbaren Volumens. Anschließend kann ein zumindest teilweises Schmelzen bzw. Anschmelzen des Haftmittels erfolgen, wobei der zu fixierende Rohling der Träger dann auf die geschmolzene bzw. angeschmolzene Haftmasse aufgesetzt werden kann.

Darüber hinaus kann erfindungsgemäß auch derart vorgegangen werden, daß das Haftmittel im nicht geschmolzenen und/oder im festen bzw. ausgehärteten Zustand in den Hohlraum bzw. in das zu verfüllende Volumen eingebracht bzw. eingefüllt wird. In diesem Zusammenhang kann das Haftmittel beispielsweise in Form von Pellets und/oder größenmäßig dem Hohlraum angepaßten Formteilen eingesetzt werden. In dem so verfüllten Volumen kann das Haftmittel bzw. die Blockmittelzusammensetzung anschließend insbesondere unter Erwärmen in einen verflüssigten und/oder in einen fließfähigen Zustand überführt werden. In diesem Zusammenhang kann es - insbesondere um das Verfüllen des Hohlraums bzw. des zu verfüllenden Volumens zu gewährleisten bzw. zu verbessern - vorgesehen sein, daß der Rohling und/oder der Träger erst nach der Verfüllung bzw. gegebenenfalls erst nach dem Aufschmelzen angeordnet bzw. positioniert wird.

Die vorliegende Erfindung betrifft gleichermaßen - gemäß einem **dritten** Aspekt der vorliegenden Erfindung einen Verbund, aufweisend mindestens einen Träger, insbesondere ein Blockstück, sowie einen auf dem Träger fixierten Rohling für ophthalmische und/oder optische Linsen, vorzugsweise einen kunststoffbasierten Brillenglasrohling, wobei der Rohling mit einer Zusammensetzung, wie zuvor definiert, auf dem Träger fixiert ist.

Gleichermaßen ist Gegenstand der vorliegenden Erfindung - gemäß einem **vierten** Aspekt der vorliegenden Erfindung - ein Verfahren zur Herstellung einer ophthalmischen und/oder optischen Linse, vorzugsweise eines kunststoffbasierten Brillenglases, wobei
(a) zunächst ein Rohling für ophthalmische und/oder optische Linsen, vorzugsweise ein kunststoffbasierter Brillenglasrohling, über oder seitlich zu einem Träger, insbesondere einem Blockstück, angeordnet wird derart, daß die zu bearbeitende Seite und/oder Fläche des Rohlings vom Träger abgewandt ist und derart, daß zwischen dem Träger einerseits und dem Rohling andererseits, gegebenenfalls unter Verwendung mindestens eines Dichtmittels, ein verfüllbarer Hohlraum resultiert;
(b) anschließend der Hohlraum mit einer vorzugsweise durch Erwärmung verflüssigten und/oder in einen fließfähigen Zustand überführten Zusammensetzung, wie zuvor definiert, zumindest im wesentlichen vollständig verfüllt wird;
(c) nachfolgend die Zusammensetzung vorzugsweise durch Abkühlung zum Erhalt eines Verbundes, aufweisend den Träger mit dem darauf mittels der Zusammensetzung fixierten Rohling, ausgehärtet und/oder verfestigt wird; und
(d) schließlich eine Bearbeitung des auf dem Träger fixierten Rohlings, insbesondere mittels Zerspanen, Fräsen, Schleifen, Polieren oder dergleichen, erfolgt und auf diese Weise die ophthalmische und/oder optische Linse, vorzugsweise das kunststoffbasierte Brillenglas, erhalten wird.

Auch die diesbezügliche Verfahrensführung ist dem Fachmann an sich wohlbekannt, so daß es diesbezüglich keiner weiteren Ausführungen bedarf. Zudem kann insbesondere auch auf die Ausführungen zu dem Verfahren gemäß dem zweiten Aspekt der vorliegenden Erfindung verwiesen werden, welche hier entsprechend gelten.

Im allgemeinen können sich dem Verfahrensschritt (d) noch weitere Verfahrensschritte anschließen. Beispielsweise kann die in Schritt (d) erhaltene ophthalmische und/oder optische Linse, vorzugsweise das kunststoffbasierte Brillenglas, in dem Fachmann an sich bekannter Art und Weise noch bedruckt, beschichtet, geprägt, eingefärbt, markiert, graviert oder dergleichen werden. Beispielweise kann eine Gravur bzw. Markierung mittels einer Laserbehandlung durchgeführt werden.

Zudem wird vorliegend eine ophthalmische oder optische Linse, vorzugsweise ein kunststoffbasiertes Brillenglas bzw. ein Kunststoffglas, beschrieben, welches nach dem Verfahren gemäß dem vierten Aspekt der vorliegenden Erfindung erhältlich ist. Die Linse bzw. das erfindungsgemäße Brillenglas zeichnet sich dadurch aus, daß es aufgrund der hervorragenden Haftung auf dem Träger mit der geringen Verformung des Haftmittels bei Kraftbeanspruchung über eine ausgesprochen hohe Oberflächengüte und damit über hervorragende optische Eigenschaften verfügt, da es besonders gleichmäßig und mit hoher Präzision bearbeitet werden kann. Insbesondere weist das mit dem erfindungsgemäßen Verfahren hergestellte Brillenglas eine hohe Oberflächengüte und optische Qualität bei nur sehr geringen Abweichungen bzw. Unregelmäßigkeiten in der bearbeiteten Oberfläche auf.

Weiterhin betrifft die vorliegende Erfindung - gemäß einem **fünften** Aspekt der vorliegenden Erfindung - die Verwendung der erfindungsgemäßen Zusammensetzung, insbesondere Blockmittelzusammensetzung, wie zuvor definiert, in der Herstellung von ophthalmischen und/oder optischen Linsen, vorzugsweise von kunststoffbasierten Brillengläsern.

Schließlich betrifft die vorliegende Erfindung - gemäß einem **sechsten** Aspekt der vorliegenden Erfindung - die Verwendung der erfindungsgemäßen Zusammensetzung, insbesondere Blockmittelzusammensetzung, wie zuvor definiert, für die Bearbeitung von Rohlingen für ophthalmische und/oder optische Linsen, vorzugsweise von kunststoffbasierten Brillenglasrohlingen, und/oder für die Herstellung von ophthalmischen und/oder optischen Linsen, vorzugsweise von kunststoffbasierten Brillengläsern, zur Fixierung des Rohlings auf einem Träger, insbesondere einem Blockstück.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

### Ausführungsbeispiele:

Nachfolgend werden erfindungsgemäße Zusammensetzungen sowie Zusammensetzungen des Standes der Technik beschrieben. Die Zusammensetzungen können auf Basis von dem Fachmann wohlbekannten Verfahren hergestellt werden, beispielsweise durch Vermischen der Ausgangssubstanzen im Rahmen einer Schmelze. Im Folgenden bezieht sich die Abkürzung "Gew.-T." auf Gewichtsteile.

### 1. Erfindungsgemäße Zusammensetzungen

a) Zur Herstellung von erfindungsgemäßen Zusammensetzungen A in Form von Blockmittelzusammensetzungen werden Mischungen erstellt, die zum einen lineare teilkristalline Polyester und zum anderen ein hydroxy- und carboxyfunktionelles Polyol enthalten. Diesbezüglich werden zur Bereitstellung der erfindungsgemäßen Zusammensetzungen A jeweils Mischungen mit Mischungsverhältnissen von Polyester einerseits zu Polyol andererseits im Bereich von 80 Gew.-T. zu 20 Gew.-T. bis 20 Gew.-T. zu 80 Gew.-T. hergestellt. Die Verarbeitungstemperatur der erhaltenen Zusammensetzungen liegt bei 70 °C bzw. 75 °C.
   Insbesondere kann ein positiver Einfluss des amorphen Anteils in der Zusammensetzung auf Basis des amorphen Polyols bzw. auf Basis des amorphen Anteils des teilkristallinen Polyesters mit insgesamt hohem E-Modul auf die Haptik bei Raumtemperatur beobachtet werden. Insbesondere werden die Verarbeitungseigenschaften und die Haptik der erfindungsgemäßen Zusammensetzungen A durch die erfindungsgemäß verwendeten Polyole positiv beeinflusst. Die Haptik ist nicht bzw. allenfalls nur geringfügig wachsartig, wobei die erfindungsgemäßen Zusammensetzungen A nach Aushärtung allenfalls nur noch leicht klebrig sind. Bei den zugrundeliegenden Versuchsreihen zeigen sich nach Aushärtung nahezu keine Risse.
   In weiteren Formulierungen auf Basis der Zusammensetzungen A werden die entsprechenden Zusammensetzungen mit 25 bis 40 Gewichtsteilen Füllstoff ausgerüstet, insbesondere wobei der Füllstoffanteil den entsprechenden Anteil der Polyolkomponente ersetzt. Insbesondere werden 60 Gewichtsteile des Alkohols durch einen Füllstoff ersetzt. Die so ausgerüsteten Zusammensetzungen weisen eine nochmals verringerte Rissbildung auf.
ba) Insbesondere aufgrund des überraschend gefundenen positiven Einflusses auf die Verarbeitungseigenschaften und die Haptik des unter a) eingesetzten Polyols auf die Verarbeitungseigenschaften und die Haptik wird dieser in den folgenden Formulierungen beibehalten und nochmals mit unterschiedlichen linearen teilkristallinen Polyestern vermischt. Hinsichtlich der eingesetzten Polyester werden Schmelzviskositäten von 500 bis 5.000 mPa·s für den ersten Polyester [Polyester I bzw. Polyesterkomponente (b1)] und Schmelzviskositäten von 5.000 bis 25.000 mPa·s für den zweiten Polyester [Polyester II bzw. Polyesterkomponente (b2)] zum Erhalt erfindungsgemäßer Zusammensetzungen B1 gewählt.
   (i) In einer Versuchsreihe zur Herstellung erfindungsgemäßer Zusammensetzungen B1 werden unterschiedliche Formulierungen hergestellt, welche die zuvor angeführten Polyester jeweils in einem Verhältnis [Polyester I bzw. Polyesterkomponente (b1)] zu [Polyester II bzw. Polyesterkomponente (b2)] zu [Polyol] im Bereich von [30 bis 50 Gew.-T.] zu [20 bis 40 Gew.-T.] zu [20 bis 40 Gew.-T.] aufweisen. In diesem Zusammenhang wird der niederschmelzende Polyester somit im Unterschuss zugegeben, und der Polyolanteil in der erfindungsgemäßen Zusammensetzung wird hoch gewählt.
      Die Haptik bei Raumtemperatur ist bei allen erfindungsgemäßen Formulierungen bzw. Zusammensetzungen sehr gut; sämtliche Materialien sind fest und zeigen kein wachsartiges Verhalten. Die Verarbeitbarkeit bei Temperaturen im Bereich von 65 °C bis 80 °C ist zwar bereits gut, mitunter jedoch noch nicht ganz optimal, was insbesondere mit dem relativ geringen Anteil an niedermolekularem Polyester zusammenhängt. Die Rissbildung des festen bzw. ausgehärteten Materials bei Raumtemperatur ist gut, was insbesondere mit dem hohen amorphen Anteil in der erfindungsgemäßen Zusammensetzung zusammenhängt.
   (ii) In einer zweiten Versuchsreihe zur Herstellung erfindungsgemäßer Zusammensetzungen B2 werden unterschiedliche Formulierungen bzw. Zusammensetzungen untersucht, welche ein Verhältnis von [Polyester I bzw. Polyesterkomponente (b1)] zu [Polyester II bzw. Polyesterkomponente (b2)] zu [Polyol] im Bereich von [40 bis 60 Gew.-T.] zu [10 bis 30 Gew.-T.] zu [20 bis 40 Gew.-T.] aufweisen. Im Rahmen dieser Versuchsreihe wird der niederschmelzende Polyester somit im Überschuss zugegeben, und der Polyolanteil wird hoch gewählt.
      Die Haptik bei Raumtemperatur ist bei allen erfindungsgemäßen Formulierungen B2 sehr gut, sämtliche Materialien sind fest und zeigen kein wachsartiges Verhalten. Die Verarbeitbarkeit bei Temperaturen im Bereich von 65 °C bis 80 °C ist bei allen Rezepturen nochmals deutlich verbessert, was insbesondere auf den hohen Anteil an niedermolekularen Polyester zurückzuführen ist. Die Rissbildung des festen bzw. ausgehärteten Materials bei Raumtemperatur ist sehr gut, was insbesondere aufgrund des hohen amorphen Anteils in den erfindungsgemäßen Zusammensetzungen B2 zurückzuführen ist. Die Messungen der Verzüge der Zusammensetzungen B2 ergeben nur geringe Abweichungen im Mikrometerbereich, und das Material wird nach einer Abkühlzeit von 10 bis 90 s fest, wobei das Material zudem nach einer Härtezeit ab 10 bis 180 min problemlos weiterverarbeitet werden kann.
   (iii) In einer dritten Versuchsreihe werden unterschiedliche Formulierungen bzw. erfindungsgemäße Zusammensetzungen B3 untersucht, welche ein Verhältnis von [Polyester I bzw. Polyesterkomponente (b1)] zu [Polyester II bzw. Polyesterkomponente (b2)] zu [Polyol] im Bereich von [50 bis 70 Gew.-T.] zu [5 bis 25 Gew.-T.] zu [15 bis 35 Gew.-T.] aufweisen. Der niederschmelzende Polyester wird somit im starken Überschuss zugegeben, und der Polyolanteil fällt etwas geringer aus.
      Die Haptik bei Raumtemperatur ist bei allen Formulierungen bzw. erfindungsgemäßen Zusammensetzungen B3 sehr gut, sämtliche Materialien sind fest und zeigen kein wachsartiges Verhalten. Die Verarbeitbarkeit bei Temperaturen von 65 °C bis 80 °C ist im Vergleich zu den zuvor angeführten Versuchsreihen nochmals weiterführend verbessert, was insbesondere an dem sehr hohen Anteil des niedermolekularen Polyesters liegt. Die Rissbildung des festen Materials bei Raumtemperatur ist insbesondere aufgrund des hohen teilkristallinen Anteils geringfügig stärker als bei den vorherigen Versuchen. Insgesamt ist die Rissbildung jedoch noch äußerst gering.
bb) Zur Herstellung von weiteren erfindungsgemäßen Zusammensetzungen B4 in Form von Blockmittelzusammensetzungen werden Mischungen erstellt, die einen ersten Polyester I bzw. (b1) und einen zweiten Polyester II bzw. (b2) aufweisen. Der erste Polyester I bzw. (b1) ist dabei ein amorpher Copolyester mit einer dynamischen Viskosität, gemessen bei 130 °C, von etwa 1.000 mPa·s. Bei dem zweiten Polyester II bzw. (b2) handelt es sich um einen teilkristallinen bzw. kristallinen Copolyester mit einer dynamischen Viskosität von etwa 2.000 mPa·s, gemessen bei einer Temperatur von 80 °C. Weiterhin weisen die erfindungsgemäßen Zusammensetzungen B4 das zuvor unter 1a) beschriebene hydroxy- und carboxyfunktionelle Polyol auf. Die Zusammensetzungen B4 weisen die angeführten Substanzen in einem Verhältnis [Polyester I bzw. Polyesterkomponente (b1)] zu [Polyester II bzw. Polyesterkomponente (b2)] zu [Polyol] in einem Bereich von [10 bis 50 Gew.-T.] zu [30 bis 70 Gew.-T.] zu [10 bis 40 Gew.-T.] auf.
   Auch bei den erfindungsgemäßen Zusammensetzungen B4 ist die Haptik bei Raumtemperatur ausgezeichnet, wobei gleichermaßen kein wachsartiges Verhalten vorliegt. Die Verarbeitbarkeit bei Temperaturen von 65 °C bis 80 °C ist gleichermaßen gut, und auch die Rissbildung des festen Materials bei Raumtemperatur ist gering. Weiterhin weisen die Zusammensetzungen B4 eine hervorragende Haftklebrigkeit auf. Im Ergebnis erfüllen auch die erfindungsgemäßen Zusammensetzungen B4 die hohen Anforderungen, die an eine Blockmittelzusammensetzung gestellt werden.

Zusammenfassend kann im Ergebnis kann festgestellt werden, daß die erfindungsgemäßen Zusammensetzungen hervorragende Eigenschaften im Hinblick auf ihre Verwendung als Blockmittelzusammensetzung für die Fixierung von Rohlingen für ophthalmische bzw. optische Linsen insbesondere auf Kunststoffbasis aufweisen, wobei insbesondere die erfindungsgemäßen Zusammensetzungen B2 mit einem Verhältnis von [Polyester I bzw. Polyesterkomponente (b1)] zu [Polyester II bzw. Polyesterkomponente (b2)] zu [Polyol] im Bereich von [40 bis 60 Gew.-T.] zu [10 bis 30 Gew.-T.] zu [20 bis 40 Gew.-T.] besonders herausragende Eigenschaften aufweisen. Insbesondere weisen die erfindungsgemäßen Zusammensetzungen B2 außerordentlich gute Eigenschaften in Bezug auf Haptik, Festigkeit und Vermeidung eines wachsartigen Verhaltens auf - und dies bei gleichzeitig sehr guter Verarbeitungsfähigkeit bei Temperaturen im Bereich von 65 bis 80 °C und hoher Rissfestigkeit des ausgehärteten Materials.

Insgesamt weisen jedoch sämtliche erfindungsgemäßen Zusammensetzungen eine sehr gute Verarbeitung, insbesondere bei Temperaturen von 50 bis 80 °C, sowie eine hohe Festigkeit bei Raumtemperatur auf. Zudem zeichnen sich die erfindungsgemäßen Zusammensetzungen dadurch aus, daß sie rezyklierbar sind bzw. ungiftige Materialien aufweisen, was insbesondere im Hinblick auf Entsorgungskosten vorteilhaft ist.

Weiterhin weisen sämtliche erfindungsgemäße Zusammensetzungen eine hervorragende Haftklebrigkeit auf, wobei beim Aushärten zudem allenfalls nur geringfügige Verzüge auftreten und keine übermäßige Tendenz zur Ausbildung von Schrumpfrissen zu beobachten ist. Auch ist ein problemloses Entblocken der Linse von dem Träger möglich.

### 2. Vergleichsbeispiele

### c) Testen von Reinsubstanzen

Im Nachfolgenden werden amorphe bzw. teilkristalline Reinsubstanzen im Hinblick auf ihre Eignung als Blockmittelzusammensetzung zur Fixierung von Brillenglasrohlingen untersucht. Die entsprechenden Reinsubstanzen werden insbesondere auch im Hinblick auf das Anforderungsprofil, wie es seitens der erfindungsgemäßen Zusammensetzungen erfüllt ist, überprüft, insbesondere im Hinblick auf die Verarbeitbarkeit bzw. -fähigkeit bei Temperaturen im Bereich von 50 °C bis 80 °C, die Festigkeit der Zusammensetzungen bei Raumtemperatur, die Wasserunlöslichkeit der Zusammensetzungen im festen Zustand sowie das Toxizitätsverhalten und die Möglichkeit zur Wiederverwertung.

Die diesbezüglich untersuchten Zusammensetzungen C des Standes der Technik auf Basis polymerbasierter amorpher bzw. teilkristalliner Kunststoffmaterialien bzw. Reinsubstanzen werden auf Basis kommerziell verfügbarer Reinsubstanzen hergestellt, wobei diesbezüglich die folgenden Substanzen in Betracht kommen: 1, 2, 3-Tri-methoxybenzol; 1,8-Octandiol; 1-Hexadecanol; 2-Aminobenzo-nitril; Benzoesäureanhydrid; Cyclododecan; Cyclododecanon; Cyclohexylphenylketon; Desoxybenzoin; Hydrochinondimethylether; Paraffin 51-53; Paraffin 57-60; Paraffin 58-62; Pentadecanon; Pentadecansäure; Phenylsalicylat; Span 65; Stearylalkohol, Tetracosan und Tetradecansäure. Insbesondere werden das wachsartige amorphe Paraffin 58-62 als weiches Polymer und Hydrochinondimethylether als spröde organische teilkristalline Verbindung getestet.

Hydrochinondimethylether weist bei 50 °C eine allenfalls zufriedenstellende Verarbeitungsviskosität auf. Bei Raumtemperatur ist diese Substanz hart und spröde. Die Klebefestigkeit ist nicht ausreichend, insbesondere im Hinblick auf ein Blockstück. Das untersuchte Paraffin 58-62 zeigt zwar eine leicht verbesserte Klebefestigkeit und ist zudem bei Temperaturen von 60 °C relativ gut zu verarbeiten, jedoch weist Paraffin 58-62 bei Raumtemperatur eine deutlich zu geringe innere Festigkeit auf, um dauerhaft und sicher auf ein Blockstück fixiert zu werden. Auch die weiteren untersuchten Reinsubstanzen weisen im Ergebnis keine optimalen Eigenschaften auf, welche zu einer diesbezüglichen Eignung als Blockmittelzusammensetzung führen könnten. Dieser Versuchskomplex zeigt im Ergebnis, daß Reinsubstanzen als solche in keiner Weise das komplette Anforderungsspektrum eines Blockmittelmaterials abdecken können.

### d) Kommerziell verfügbare Klebekitte mit und ohne Füllstoffe

Weiterhin werden kommerziell verfügbare Klebekitte untersucht, wobei diesbezüglich die wichtigsten Auswahlkriterien die Verarbeitungstemperatur, die Haftung und die angegebene Härte bei Raumtemperatur sind. Insbesondere werden Klebekitte auf Basis von Kolophonium, Schellack, Wachsrohkitten oder Kleber aus synthetisch hergestellten Kunstharzen untersucht:
(i) Zunächst werden synthetische Kleber auf Maleinat- und Formaldehydbasis untersucht. Diese zeigen zwar zufriedenstellende Klebeeigenschaften sowohl zu einem Blockstück als auch zu einer Blockfolie bzw. einer Schutz- bzw. Haftfolie eines Brillenglasrohlings. Jedoch weisen derartige nichterfindungsgemäße Zusammensetzungen eine geringe innere Festigkeit und zu hohe Verarbeitungstemperaturen auf.
(ii) Weiterhin werden verschiedene Kunstharztypen auf Maleinat- und Formaldehydbasis untersucht, die einen hohen Füllstoffanteil enthalten. Im Unterschied zu den unter d(i) genannten synthetischen Harzen besitzen diese Kunstharztypen eine höhere innere Festigkeit bei Raumtemperatur. Jedoch sind die weiteren relevanten Eigenschaften nicht zufriedenstellend.
(iii) Weiterhin werden Klebekitte auf Basis von natürlichen und synthetischen Wachsen untersucht. Diese weisen eine sehr geringe Schmelztemperatur und somit eine relativ gute Verarbeitungsviskosität auf. Die Klebeeigenschaften zu einer Blockfolie bzw. einer Schutz- bzw. Haftfolie einerseits und einem Blockstück andererseits sind mäßig bis zufriedenstellend. Die Härte bzw. innere Festigkeit der Materialien bei Raumtemperatur ist mit einem Wert von 28 zu gering, so daß derartige Substanzen nicht als Blockmittel geeignet sind.
(iv) In einem nächsten Untersuchungskomplex werden Klebekitte auf Basis von Schellack bzw. Kolophonium mit natürlichen Weichmachern unter Berücksichtigung einer geringen Verarbeitungstemperatur untersucht. Diesbezüglich zeigen sich zwar zufriedenstellende Klebeeigenschaften zu einem Blockstück und zu einer Blockfolie bzw. einer Schutz- bzw. Haftfolie, jedoch weisen die in Rede stehenden Klebekitte mit einem Wert von 30 eine nur unzureichende Härte auf.
   Die unter d(i) bis d(iv) beschriebenen Zusammensetzungen weisen zudem den gravierenden Nachteil auf, daß diese Klebekitte eine sehr starke Adhäsion zu den Maschinenbauteilen aufweisen, was sich bei der Prozessierung negativ auswirkt.
(v) Im Weiteren werden Versuche mit Klebekitten auf Basis von thermoplastischen Caprolactamen mit einem Erweichungspunkt zwischen 58 °C und 60 °C sowie mit Polyolen mit ähnlichem Erweichungsbereich durchgeführt. Die untersuchten Caprolactame führen zwar zu guten Klebeeigenschaften zu einem Blockstück und zu einer Blockfolie bzw. einer Schutz- bzw. Haftfolie und weisen auch zufriedenstellende innere Festigkeiten bei Raumtemperatur auf. Jedoch sind die weiteren Eigenschaften nicht zufriedenstellend im Hinblick auf eine Eignung als Blockmittelzusammensetzung. Die untersuchten Polyole weisen zudem eine deutlich geringere Klebefestigkeit auf und sind bei Raumtemperatur zudem fingernagelweich.
(vi) Gleichermaßen werden Klebekitte auf Basis von Kolophoniumderivaten, Maleinatharzen, Weichmachern und zusätzlich 40 Gew.-T. Füllstoffen untersucht. Hierbei zeigt sich, daß die jeweiligen Kombination die erforderlichen Eigenschaften für eine Blockmittelzusammensetzung zwar besser erfüllt als die zuvor genannten Zusammensetzungen, da sowohl die Haftung zu einem Blockstück als auch zu einer Blockfolie bzw. einer Schutz- bzw. Haftfolie sind grundsätzlich gegeben. Zudem ist die innere Festigkeit bei Raumtemperatur durch die Zugabe von Füllstoffen relativ hoch, wobei das Material wasserbeständig ist und beim Verfestigen einen relativ geringen Schrumpf aufweist. Nachteilig ist jedoch die hohe Verarbeitungstemperatur, die deutlich oberhalb von 80 °C liegt.
(vii) Abietinsäure (Bestandteil von Kolophonium) kann durch die nachfolgende chemische Strukturformel beschrieben werden: 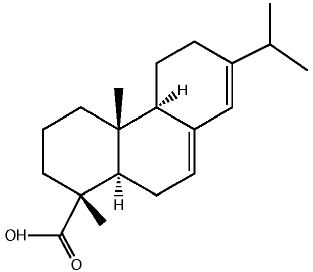
   Auf Basis dieser Formulierung werden gezielt Untersuchungen vorgenommen, mit welchen die insbesondere unter d(vi) beschriebenen Eigenschaften von Klebekitten auf Basis von Kolophonium erhalten werden sollen, wobei diesbezüglich insbesondere die Schmelzviskosität und die damit verbundene Bearbeitungstemperatur herabgesetzt werden soll.
   Die diesbezüglich durchgeführten Untersuchungen können jedoch nicht zu einer Verbesserung der entsprechenden Eigenschaften führen, so daß im Ergebnis auch Zusammensetzungen auf Basis von Kolophonium nicht im Hinblick auf eine spezielle Verwendung als Blockmittelzusammensetzung geeignet sind.

Zusammenfassend ist festzustellen, daß die unter d) beschriebenen Klebekitte zwar eine mitunter relativ gute Klebefestigkeit aufweisen, die innere Festigkeit aber in keiner Weise ausreicht, um Formabweichungen in den der Blockung folgenden Glasbearbeitungsschritten zu vermeiden. Die Erweichungstemperaturen und die damit direkt in Verbindung stehende Verarbeitbarkeit liegen bei den meisten getesteten Klebekitten deutlich außerhalb des erfindungsgemäß realisierten Bereichs. Die gemäß d) angeführten Formulierungen auf Basis von Klebekitten weisen zwar eine gewisse Verbesserung der Eigenschaften im Vergleich zu den unter c) getesteten Reinsubstanzen auf, jedoch kann dies nicht zu einer Eignung der beschriebenen Zusammensetzungen im Sinne einer Verwendung als Blockmittel führen.

### e) Weitere Untersuchungen an Zusammensetzungen des Standes der Technik

Auf Basis der obigen Eigenschaften der Klebekittformulierung aus Kolophoniumderivaten, unterschiedlichen Maleinatharzen, Weichmachern und auf Basis des Einsatzes von Füllstoffen werden weitere Formulierungen aus diesen Grundkomponenten hergestellt und auf ihre Eignung als Blockmittel bzw. Blockmittelzusammensetzung für den Bearbeitungsprozess von Kunststoffgläsern bzw. Kunststofflinsen untersucht.

Die durchgeführten Versuche starten in Anlehnung an die Formulierung der Klebekitte auf Basis von Kolophoniumderivaten, Maleinatharzen, Weichmachern und zusätzlichen Füllstoffen, welche in einer Menge von 40 Gew.-T. eingesetzt werden. Auch eine weitere Modifizierung der Zusammensetzungen führt nicht dazu, die zuvor angeführten negativen Eigenschaften dieser Zusammensetzungen zu überwinden bzw. zu kompensieren.
(i) Zunächst werden rein amorphe Formulierungen getestet, insbesondere da diese eine nur geringe Rissbildung aufweisen. In diesem Zusammenhang werden unterschiedliche Kolophoniumderivate mit verschiedenen Erweichungspunkten gemischt, welche sich zusätzlich signifikant in ihrer Härte unterscheiden. Ein erstes Harz hat dabei eine Erweichungstemperatur im Bereich der Raumtemperatur und ist relativ weich, ein zweites Harz hat eine Erweichungstemperatur von 65 °C und ist dabei sehr hart.
   Bei sämtlichen Mischungen mit einem Verhältnis des ersten Harzes zu dem zweiten Harz im Bereich von 80 zu 20 Gew.-T. bis 20 zu 80 Gew.-T. treten keine Risse auf. Die Haftung zu einem Blockstück und zu unterschiedlichen Blockfolien und/oder Schutz- bzw. Haftfolien ist zufriedenstellend. Die Verarbeitungstemperatur kann gegenüber reinen Bindemitteln aus Kolophonium, wie zuvor beschrieben, von 115 °C auf bis zu 62 °C bei der Mischung mit dem geringsten Haftanteil abgesenkt werden. Im Allgemeinen sind die Eigenschaften im Hinblick auf eine Eignung als Blockmittelzusammensetzung jedoch nicht zufriedenstellend. Denn es zeigt sich gleichermaßen, daß kolophoniumbasierte amorphe Systeme zwar relativ gute Klebe- und Haftungseigenschaften, jedoch zu hohe Verarbeitungstemperaturen aufweisen.
(ii) Auch eine Beimischung teilkristalliner Polyester mit Schmelzviskositäten von 1.000 mPa·s bis 15.000 mPa·s kann nicht zu einer Verbesserung der Eigenschaften kolophoniumbasierter Zusammensetzungen führen. So werden Mischungen mit einem Verhältnis von Polyester zu Kolophonium von 80 zu 20 Gew.-T. bis 20 zu 80 Gew.-T. untersucht. Zwar können die Verarbeitungsviskositäten bzw. die Schmelztemperatur auf einen fixen Schmelzpunkt bei insgesamt zufriedenstellenden Haftungseigenschaften eingestellt werden, jedoch zeigen sich starke Risse, was insbesondere mit dem hohen teilkristallinen Anteil des Polyesters zusammenhängen kann.
(iii) In einem weiteren Versuchskomplex werden den Zusammensetzungen gemäß e(ii) weiterhin 40 Gew.-T. des Füllstoffs Kaolin zugefügt, um hierdurch zu versuchen, den Kristallisationsschrumpf und die damit verbundene Rissentwicklung zu minimieren. Die Mischungen weisen ein Verhältnis von teilkristallinem Polyester zu Kolophoniumderivat im Bereich von 80 zu 20 Gew.-T. bis 20 zu 80 Gew.-T. auf. Gleichermaßen werden erneut Polyester mit Schmelzviskositäten von 1.000 mPa·s bis 15.000 mPa·s verwendet.
   Es zeigt sich, daß mit dem Füllstoff die Verarbeitungsviskositäten stark ansteigen und nicht sämtliche Formulierungen verarbeitbar sind. Zudem zeigt ein erhöhter amorpher Kolophoniumanteil eine Ablösung der Zusammensetzung von einem Blockstück auf. Die Rissbildung ist etwas vermindert, jedoch weiterhin hoch.
(iv) Für weitere Untersuchungen werden Formulierungen verwendet, bei denen das Verhältnis von teilkristallinem Polyester zu Kolophonium im Bereich von 80 zu 20 Gew.-T. bis 20 zu 80 Gew.-T. beträgt. Es werden unterschiedliche Füllstoffe mit geringerer Ölzahl als Kaolin in einer Menge von 40 Gew.-T. zugegeben, damit die resultierenden Zusammensetzungen bessere Benetzungseigenschaften und einen weniger starken Anstieg der Viskosität aufweisen, wodurch die Rissbildung vermieden werden soll. In diesem Versuchskomplex werden zwei Füllstoffe auf Basis von SiO₂ mit einer Ölzahl von 17 bis 11 untersucht. Zudem werden zwei Füllstoffe auf Basis von BaSO₄ untersucht.
   Die Formulierungen weisen zwar eine verringerte Rissbildung auf, jedoch sind die Verarbeitungstemperaturen bei sämtlichen Varianten deutlich höher als 75 °C, so daß ein Vergießen der hier untersuchten Zusammensetzungen nicht möglich ist.
(v) Weitere Zusammensetzungen werden untersucht, wobei hierbei der zuvor verwendete teilkristalline Polyester mit einer Schmelzviskosität von 1.000 mPa·s bis 5.000 mPa·s durch einen Polyester mit einer Schmelzviskosität von 500 mPa·s bis 1.000 mPa·s ersetzt werden soll. Zudem wird der Füllstoffanteil von 40 Gew.-T. auf 30 Gew.-T. herabgesetzt. Durch diese Maßnahmen soll die Verarbeitungsviskosität herabgesetzt werden. Die Zusammensetzungen weisen ein Verhältnis von teilkristallinem Polyester zu Kolophonium im Bereich von 80 zu 20 Gew.-T. bis 20 zu 80 Gew.-T. auf. Als Füllstoffe werden SiO₂, BaSO₄ sowie eine Variante mit Glasperlen verwendet, welche sich durch viskositätssenkende Eigenschaften auszeichnet.
   Durch diese Maßnahmen kann zwar eine zufriedenstellende Verarbeitungsviskosität bei 65 °C erreicht werden, allerdings weisen sämtliche Formulierungen bzw. Zusammensetzungen eine durch einen hohen Schrumpf bedingte Rissbildung auf, wobei dieser bei den Zusammensetzungen mit dem Füllstoff auf Basis von Glasperlen noch am geringsten ist. Jedoch sind auch die diesbezüglichen Ergebnisse nicht zufriedenstellend.
(vi) Für die hier beschriebenen Versuche werden verschiedene Formulierungen unter Verwendung eines Füllstoffs auf Basis von Glasperlen untersucht. Die eingesetzten Mischungen enthalten einen niedermolekularen teilkristallinen Polyester mit einer Schmelzviskosität von mPa·s bis 1.000 mPa·s sowie Kolophonium, wobei das diesbezügliche Verhältnis des teilkristallinen Polyesters zu Kolophonium im Bereich von 80 zu 20 Gew.-T. bis 20 zu 80 Gew.-T. liegt. Die Zusammensetzungen weisen den Füllstoff aus Glasperlen in einer Menge von 20 bis 50 Gew.-T. und zudem einen viskositätssenkenden Wachs in einer Menge von 5 bis 20 Gew.-T. auf, wodurch die Erhöhung der Viskosität durch den Füllstoffanteil kompensiert werden soll. Dies ist jedoch nicht in einem zufriedenstellenden Maße möglich. Zudem wird der Schrumpf und die damit einhergehende Rissbildung zwar etwas vermindert, jedoch nicht vollständig unterdrückt.
(vii) In dieser Versuchsserie wird der amorphe Harzanteil auf über 50 Gew.-T. erhöht, wodurch der Schrumpf minimiert werden soll. In diesem Zusammenhang werden unterschiedliche Formulierungen hergestellt, die einen niedrigviskosen teilkristallinen linearen Polyester und Kolophonium in einem diesbezüglichen Verhältnis im Bereich von 50 bis 80 Gew.-T. zu 50 bis 20 Gew.-T. enthalten. In weiteren Formulierungen wird anstelle der Polyester ein Caprolacton verwendet. Auf Füllstoffe wird komplett verzichtet.
   Bei diesen Zusammensetzungen treten zwar keine Risse auf, und sämtliche Zusammensetzungen sind bei einer Temperatur von 65 °C relativ gut zu verarbeiten. Der Nachteil ist jedoch in einer wachsartigen Haptik und in einer hohen Restklebrigkeit bei Raumtemperatur zu sehen. Es zeigt sich, daß das Herabsetzen des teilkristallinen Anteils von 70 Gew.-T. auf unter 50 Gew.-T. und der Verschnitt mit einem amorphen Polymer den Schrumpf und die Rissbildung etwas minimiert.

### 3. Weitere Vergleichsbeispiele

Im Stand der Technik verwendete Schmelzkleber, welche als Blockmittel eingesetzt werden, bestehen im Allgemeinen aus einer Metalllegierung mit einem niedrigen Schmelzpunkt. Dieses Material bringt mehrere Nachteile mit sich, wie eine erhöhte Toxizität und hohe Entsorgungskosten. Zusammensetzungen auf Basis von Polymeren, wie sie im Stand der Technik bekannt sind, können die mit Metalllegierungen einhergehenden Nachteile zwar zum Teil kompensieren, jedoch weisen derartige Zusammensetzungen insgesamt nicht immer positive Eigenschaften auf, so daß diese sich im Allgemeinen nicht als Blockmittel eignen.

So erfüllen z. B. Zusammensetzungen auf Basis von Polycaprolacton nicht die Gesamtheit der geforderten Eigenschaften in zufriedenstellendem Maße. Die größten Probleme, welche bei der Verwendung von Polycaprolacton auftreten, sind insbesondere eine hohe Viskosität, was die Verarbeitung erschwert, und ein hoher Materialschwund, wodurch Risse bei der Aushärtung auftreten und Positionierungsfehler der zu bearbeitenden Linse bzw. des Kunststoffglases verursacht werden, so daß insgesamt die Präzision bei der Bearbeitung - insbesondere beim Fräsen, Drehen, Polieren bzw. Schleifen - der (Kunststoff-)Linse verschlechtert ist. In diesem Zusammenhang treten insbesondere beim Aushärten übermäßige Verzüge auf, so daß letztendlich auch die optische Qualität einer derart geblockten Linse negativ beeinträchtigt ist, insbesondere da deren exakte Positionierung insgesamt verschlechtert ist. Weiterhin weisen die Zusammensetzungen des Standes der Technik aufgrund der nicht optimalen Haftklebrigkeit nur eingeschränkte Möglichkeiten einer vollständigen Unterblockung auf. Zudem sind die Zusammensetzungen hinsichtlich ihrer Toxizität problematisch, was auch deren Entsorgung erschwert. Die Viskosität und der Materialschwund können zwar in einem gewissen Umfang durch Variation des Molekulargewichts beeinflusst werden, wobei jedoch eine Verbesserung einer dieser Eigenschaften zur Verschlechterung der jeweils anderen Eigenschaft führt.

Um die mit dem im Stand der Technik eingesetzten Polycaprolacton einhergehenden Nachteile zu kompensieren, ist es im Stand der Technik auch versucht worden, derartige Zusammensetzungen mit thermoplastischen Elastomeren zu vermischen bzw. die Polycaprolactone durch andere Polymere zu ersetzen. Die diesbezüglich eingesetzten Polymere weisen zwar im Wesentlichen einen Schmelzpunkt im gewünschten Bereich auf und härten im reinen Zustand relativ schnell aus. In Abhängigkeit vom Molekulargewicht der eingesetzten Polymere variieren auch in gewisser Weise die Viskosität der Schmelze und der Materialschwund bei der Aushärtung, wobei diesbezüglich bei den eingesetzten Polymeren im Stand der Technik oftmals der Einsatz von Additiven erforderlich ist, um weitere Eigenschaften zu optimieren. So sind verschiedene Ansätze im Stand der Technik bekannt, um die Viskosität der Schmelze zu senken und um die durch Kristallisation verursachte Materialschwindung zu verringern. Dies ist jedoch jeweils mit nur geringem Erfolg geschehen. So führt zwar der Einsatz verschiedenartiger Füllstoffe dazu, daß die Kristallisation gestört und damit der Materialschwund verringert wird, der Nachteil solcher Füllstoffe besteht jedoch darin, daß die Viskosität der Schmelze nachteilig beeinflusst wird.

Vor diesem Hintergrund ist es im Stand der Technik auch versucht worden, die Additive als solche durch eine spezielle Auswahl zu optimieren, wobei diesbezüglich vorrangig solche Additive eingesetzt werden, die primär eine Erweichung des Materials zur Folge haben sollen. Diese Additive führen in der Regel zwar zu einer geringeren Schmelzviskosität und zu einer geringeren Spannung im Material, jedoch sind die Eigenschaften der diesbezüglichen Zusammensetzungen im Hinblick auf ihre Eignung als Blockmittelzusammensetzung immer noch nicht optimal.

In diesem Zusammenhang sind weitere Zusammensetzungen des Standes der Technik sowie deren spezifischen Eigenschaften nachfolgend insbesondere tabellarisch aufgeführt. Die angeführten Tabellen enthalten insbesondere Informationen über die verwendeten Mischungen sowie eine Bewertung der Haftung des Materials auf einer Polycarbonatlinse, welche mit einer Schutzfolie beklebt ist. Zudem werden Aussagen zur Haptik des ausgehärteten Materials, der Viskosität der Schmelze und zu den Auswirkungen des Materialschwunds bei der Aushärtung gegeben. Im Falle der Viskosität ist eine Bewertung als "niedrig" oder "mittelmäßig" als gießfähige Schmelze zu verstehen. Schmelzen mit hoher Viskosität lassen sich in den meisten Fällen nur mit großen Schwierigkeiten gießen oder überhaupt nicht verarbeiten. Bei Schmelzen mit zu hoher Viskosität ist ein Vergießen bzw. ein Guss in jedem Fall unmöglich.

Im Rahmen von Vorversuchen werden nichterfindungsgemäße Zusammensetzungen auf Basis von Polycaprolacton (PCL) und - insbesondere zur Rissvermeidung - einem thermoplastischen Elastomer (TE) eingesetzt. Die diesbezüglichen Ergebnisse bzw. Eigenschaften der nichterfindungsgemäßen Zusammensetzungen sind in der nachfolgenden Tabelle 1 angeführt.

**Tabelle 1:**

| **Probe** | **Haftung** | **Haptik** | **Schmelzpunkt** | **Viskosität** |
|---|---|---|---|---|
| PCL | gut | gut | 60 °C | niedrig |
| TE | gut | gut | 75 °C | zu hoch |
| PCL/TE (10:1) | gut | Polymere sind nicht mischbar. | | |
| PCL/TE (3:1) | gut | | | |
| PCL/TE (1:1) | keine, da die Polymere nicht aneinander haften | | | |
| PCL/TE (1:10) | gut | | | |

Die verwendeten Materialien liegen immer entmischt vor, weshalb sich keine Verbesserung der Schrumpfung einstellt. Das reine thermoplastische Elastomer ist zudem zu weich für den Einsatz als Blockmittelzusammensetzung.

In einem weiteren Komplex werden Zusammensetzungen auf Basis von Polyestern eingesetzt, wobei diesbezüglich Polyester mit variierender Flexibilität (steifer Polyester = SP, flexibler Polyester = FP und hochflexibler Polyester = HFP) verwendet werden. Die Polyester wurden auch in verschiedenen Mischungen getestet. Tabelle 2 zeigt die diesbezüglichen Ergebnisse.

**Tabelle 2:**

| **Probe** | **Haftung** | **Haptik** | **Schmelzpunkt** | **Viskosität** | **Schwindung** |
|---|---|---|---|---|---|
| SP | gut | gut | 60 °C | niedrig | rissig |
| FP | gut | zu weich | 60 °C | niedrig | rissig |
| HFP | gut | gut | 60 °C | niedrig | viele Risse |
| SP/FP (1:1) | gut | zu weich | 60 °C | niedrig | rissig |

Diesbezüglich ist auch zu beobachten, daß die Auswirkung des Materialschwunds und damit die Rissbildung von der Formgebung und der Materialmenge abhängig sind.

Im Rahmen eines weiteren Untersuchungskomplexes werden Polyester mit Füllstoffen verarbeitet, wobei der erste getestete Füllstoff A in partikulärer Form vorliegt. Diesbezüglich wird ein Ansatz mit FP im Verhältnis FP zu Füllstoff A von 4 : 1 durchgeführt. Hierbei zeigt sich, daß die Vermischung nur schwer gelingt. Es tritt zudem eine Aggregation der Partikel auf und die Viskosität der Schmelze ist erhöht. Zudem wird das Material spröde und ist somit nicht für den Einsatz als Blockmittel geeignet.

Die folgende Tabelle 3 zeigt Ergebnisse, welche mit Mischungen des steifen Polyesters SP mit einem Füllstoff B erzielt werden. Füllstoff B ist ebenfalls ein partikuläres Material, welches sich aber gut mit den verwendeten Polyestern vermischen lässt. Die Gewichtsteilangabe beschreibt den Anteil des Füllstoffs B in der Mischung.

**Tabelle 3:**

| **Probe** | **Haftung** | **Haptik** | **Schmelzpunkt** | **Viskosität** | **Schwindung** |
|---|---|---|---|---|---|
| 1 Gew.-T. | gut | gut | 60 °C | niedrig | rissig |
| 0,5 Gew.-T. | gut | gut | 60 °C | niedrig | rissig |
| 0,1 Gew.-T. | gut | gut | 60 °C | niedrig | rissig |
| 0,01 Gew.-T. | gut | gut | 60 °C | niedrig | rissig |

Sämtliche Proben zeigen sehr ähnliche Eigenschaften. Da die Rissbildung im Vergleich zu reinem SP verspätet auftritt, kann darauf geschlossen werden, daß der Füllstoff eine gewisse Wirkung aufweist. Diese Wirkung kann allerdings nur bis zu einem gewissen Grad erreicht werden. Die Erhöhung des Füllstoffanteils von 0,5 Gew.-T. auf 1 Gew.-T. zeigt keine Auswirkung auf den Materialschwund.

Weiterhin werden flexible Polyester mit höheren Molekulargewichten getestet. Diese werden mit flexiblen Polyestern mit niedrigem Molekulargewicht vermischt. Diesen Mischungen wird der Füllstoff B zugesetzt. Die Gewichtsteilangabe gibt den Anteil von Füllstoff B wieder.

**Tabelle 4:**

| **Probe** | **Haftung** | **Haptik** | **Schmelzpunkt** | **Viskosität** | **Schwindung** |
|---|---|---|---|---|---|
| 1 Gew.-T. | gut | gut | 60 °C | niedrig | Risse |
| 2,5 Gew.-T. | gut | gut | 60 °C | niedrig | Risse |
| 3,8 Gew.-T. | gut | gut | 60 °C | niedrig | wenig Risse |
| 5,7 Gew.-T. | gut | gut | 60 °C | mittelmäßig | wenig Risse |
| 9,1 Gew.-T. | gut | gut | 60 °C | sehr hoch | wenig Risse |
| 16,7 Gew.-T. | | gut | 60 °C | fließt nicht | |

Die Rissbildung kann auch auf Basis dieser Zusammensetzung zwar verringert, jedoch nicht verhindert werden. Ab einem Füllstoffanteil von etwa 5 Gew.-T. macht sich eine Erhöhung der Viskosität negativ bemerkbar. Bei einem Füllstoffanteil von etwa 15 Gew.-T. ist die Schmelze zu viskos für die Verarbeitung.

In der folgenden Tabelle 5 sind weitere Experimente mit Mischungen von FP in Kombination mit Füllstoff B gelistet. Die Gewichtsteilangabe bezieht sich auf den Anteil an Füllstoff B.

**Tabelle 5:**

| **Probe** | **Haftung** | **Haptik** | **Schmelzpunkt** | **Viskosität** | **Schwindung** |
|---|---|---|---|---|---|
| 1,7 Gew.-T. | gut | akzeptabel | 65 °C | niedrig | wenig Risse |
| 4,3 Gew.-T. | gut | gut | 65 °C | mittelmäßig | wenig Risse |
| 8,2 Gew.-T. | gut | gut | 65 °C | mittelmäßig | wenig Risse |

Alle Proben zeigen zwar erst mit Verzögerung Risse, jedoch kann auch in diesem Fall eine vollständige Vermeidung der Rissbildung nicht erzielt werden.

Da die Wirksamkeit von Füllstoff B begrenzt ist, wird ein weiterer Füllstoff C auf Polymerbasis getestet. Es werden zwei Varianten untersucht. Zum einen erfolgt die Vermischung von SP mit Füllstoff C und zum anderen die Vermischung von FP mit Füllstoff C. Die folgende Tabelle 6 zeigt die Ergebnisse, welche mit Mischungen auf Basis von SP und Füllstoff C erhalten werden. Die Gewichtsanteilangabe beschreibt den Füllstoffanteil in der Zusammensetzung.

**Tabelle 6:**

| **Probe** | **Haftung** | **Haptik** | **Schmelzpunkt** | **Viskosität** | **Schwindung** |
|---|---|---|---|---|---|
| 4,5 Gew.-T. | gut | gut | 60 °C | niedrig | Risse |
| 8,4 Gew.-T. | gut | gut | 65 °C | niedrig | Risse |
| 12,2 Gew.-T. | gut | gut | 70 °C | mittelmäßig | wenig Risse |
| 15,9 Gew.-T. | gut | gut | 80 °C | mittelmäßig | sehr wenig Risse |

Der Füllstoff C kann die Rissbildung zwar etwas stärker verringern als der Füllstoff B. Allerdings kommt es zu negativen Auswirkungen nicht nur auf die Viskosität, sondern auch auf den Schmelzpunkt.

Anschließend werden Mischungen von flexiblen Polyestern mit Füllstoff C getestet. Zunächst wird FP mit Füllstoff C im Verhältnis von 84 zu 16 Gew.-T. hergestellt. Auch die diesbezüglichen Ergebnisse sind nicht zufriedenstellend.

Für die in der folgenden Tabelle 7 aufgelisteten Experimente wird der Polyester SP mit einem weichen Additiv (im Folgenden als WA bezeichnet) vermischt. Die Prozentangabe bezieht sich auf den Gewichtsanteil des Additivs.

**Tabelle 7:**

| **Probe** | **Haftung** | **Haptik** | **Schmelz punkt** | **Viskosität** | **Schwindung** |
|---|---|---|---|---|---|
| 50,7 Gew.-T. | | spröde | 60 °C | zu hoch | |
| 23 Gew.-T. | | spröde | 60 °C | zu hoch | |
| 12,1 Gew.-T. | | spröde | 60 °C | zu hoch | |
| 8 Gew.-T. | | spröde | 60 °C | zu hoch | |
| 3,9 Gew.-T. | zufriedenstellend | zufriedenstellend | 60 °C | mittelmäßig | Risse |

Da das Additiv WA heterogen mit dem Polyester vermischt ist, kommt es bei hohen Additivanteilen zu einer hohen Viskosität der Schmelze. Wird der Anteil so weit abgesenkt, daß die Viskosität akzeptabel ist, treten Risse im Material auf.

In weiteren Untersuchungen wird der Polyester SP erneut mit dem weichen Additiv WA vermischt, allerdings in geringeren Anteilen als zuvor. Zusätzlich wird der Füllstoff B eingesetzt. Die folgende Tabelle 7 enthält in der Spalte "Probe" die verwendeten Gewichtsanteile der Komponenten.

**Tabelle 8:**

| **Probe SP1/WA1/ Füllstoff B** | **Haftung** | **Haptik** | **Schmelzpunkt** | **Viskosität** | **Schwindung** |
|---|---|---|---|---|---|
| 95,5/3,6/0,9 | gut | gut | 70 °C | mittelmäßig | Risse |
| 92,0/3,5/4,5 | gut | gut | 80 °C | hoch | Risse |
| 94,3/2,5/3,2 | gut | gut | 80 °C | mittelmäßig | Risse |
| 93,8/2,3/3,9 | gut | gut | 80 °C | mittelmäßig | viele Risse |

Die Zugabe von WA und Füllstoff B führt nicht zu einer Verhinderung der Rissbildung.

Da sowohl die Wirkung von WA als auch von Füllstoff B begrenzt ist, wird der Polyester erneut mit Füllstoff C getestet (Tabelle 9).

**Tabelle 9:**

| **Probe SP/ Füllstoff C WA** | **Haftung** | **Haptik** | **Schmelzpunkt** | **Viskosität** | **Schwindung** |
|---|---|---|---|---|---|
| 0/16,5/83,5 | | Wachs | 60 °C | niedrig | |
| 76/15/9 | | gut | 90 °C | zu hoch | |
| 70/13/17 | | spröde | 80 °C | mittelmäßig | |
| 74/17/12 | | spröde | 90 °C | mittelmäßig | |
| 91,7/7,4/0,9 | gut | gut | 70 °C | niedrig | Risse |
| 79,8/15,2/5,0 | gut | gut | 90 °C | mittelmäßig | Risse |
| 77/18/5 | gut | gut | 90 °C | mittelmäßig | Risse |
| 75,1/20/4,9 | | gut | 90 °C | zu hoch | |
| 74/20/6 | | gut | 90 °C | zu hoch | |
| 73,2/19,8/7 | | gut | 90 °C | zu hoch | |
| 72,4/19,6/8 | | gut | 90 °C | zu hoch | |
| 70,9/19,1/10 | | gut | 90 °C | zu hoch | |
| 66,9/18,1/15 | | gut | 90 °C | zu hoch | |
| 66,9/18,1/15 | gut | gut | 90 °C | mittelmäßig | wenig Risse |
| 61,3/16,6/22,1 | gut | gut | 90 °C | gut | Risse |
| 65,3/20/14,6 | gut | gut | 90 °C | gut | wenig Risse |
| 62/19/19 | gut | gut | 90 °C | gut | viele Risse |

Die Vermischung von SP1 mit Füllstoff C führt sogar zu einer deutlichen Verringerung des Materialschwunds, Risse können jedoch nicht vollständig verhindert werden. Die Zugabe von WA2 führt zu einer Senkung der Viskosität, was jedoch nur bis zu einem gewissen Grad erfolgreich ist. Hier lässt sich keine Verringerung der Rissbildung erkennen.

Weiterhin wird ein Ansatz verfolgt, zu einer Mischung aus Polyester SP, Füllstoff C und weichem Additiv WA erneut WA zuzugeben, um den Materialschwund so weit zu verringern, daß auch die Rissbildung weiter verringert wird. Die folgende Tabelle 10 enthält die Auflistung der getesteten Proben mit den Gewichtsanteilen der jeweiligen Komponenten.

**Tabelle 10:**

| **Probe SP/ Füllstoff C WA/WA** | **Haftung** | **Haptik** | **Schmelzpunkt** | **Viskosität** | **Schwindung** |
|---|---|---|---|---|---|
| 61,4/18,8/18,8/1 | gut | gut | 90 °C | mittelmäßig | Risse |
| 60,7/18,6/18,6/2,1 | gut | gut | 90 °C | hoch | Risse |
| 60/18,4/18,4/3,2 | gut | gut | 90 °C | hoch | wenig Risse |
| 59,6/18,2/18,2/4,0 | gut | gut | 90 °C | hoch | Risse |
| 58,9/18,1/18,1/4,9 | gut | gut | 90 °C | hoch | Risse |
| 66,0/15,0/15,0/4,0 | gut | gut | 90 °C | mittelmäßig | wenig Risse |
| 74,6/11,2/11,2/3,0 | gut | gut | 90 °C | niedrig | Risse |
| 70,4/15,0/10,6/4,0 | gut | gut | 90 °C | mittelmäßig | wenig Risse |
| 67,8/18/10,2/4,0 | gut | gut | 90 °C | hoch | Risse |
| 66,1/20,1/9,9/3,9 | | gut | 90 °C | zu hoch | |
| 64,6/19,6/12,0/3,8 | gut | gut | 90 °C | mittelmäßig | Risse |
| 62,3/19,0/15,0/3,7 | gut | gut | 90 °C | mittelmäßig | wenig Risse |
| 60/20/16/4 | gut | gut | 90 °C | mittelmäßig | wenig Risse |
| 58/20/18/4 | gut | gut | 90 °C | niedrig | wenig Risse |
| 55/21/20/4 | gut | gut | 90 °C | mittelmäßig | wenig Risse |
| 48,2/24,1/23,8/3,9 | | gut | 90 °C | zu hoch | |
| 46,9/23,4/25,9/3,8 | gut | gut | 90 °C | niedrig | wenig Risse |
| 46,4/23,2/25,7/4,7 | Die Schmelzen verklumpen, die letzten beiden aufgeführten Schmelzen sind aufgrund des hohen WA2-Anteils wachsartig | | | | |
| 45,2/22,7/27,5/4,6 | | | | | |
| 39,0/28,9/28,2/3,9 | | | | | |
| 36,1/26,8/33,5/3,6 | | | | | |
| 34,3/25,4/36,9/3,4 | | | | | |
| 39,1/23,6/34,1/3,2 | | | | | |

Die Vermischung von Mischungen auf Basis von SP und Füllstoff C und WA mit weiterem WA führt zwar zu einer leichten Verringerung der Schrumpfung, wobei jedoch eine Rissbildung in keiner Weise verhindert werden kann. Nachteilig ist zudem, daß sich durch die Zugabe von WA die Viskosität drastisch erhöht.

Parallel zum Ansatz mit weichen Additiven wird ein Ansatz unter Verwendung eines flüssigen Weichmachers, im Folgenden auch als WM bezeichnet, untersucht. Zunächst wird dieser mit einem flexiblem Polyester FP vermischt und getestet. Die folgende Tabelle 11 zeigt die Ergebnisse mit der Angabe des Gewichtsanteils von WM.

**Tabelle 11:**

| **Probe** | **Haftung** | **Haptik** | **Schmelzpunkt** | **Viskosität** | **Schwindung** |
|---|---|---|---|---|---|
| 1,8 Gew.-T. | | gut | 70 °C | zu hoch | |
| 4,6 Gew.-T. | | gut | 70 °C | zu hoch | |
| 14,4 Gew.-T. | gut | gut | 70 °C | sehr hoch | keine Risse |
| 21,2 Gew.-T. | gut | gut | 70 °C | hoch | keine Risse |
| 25,1 Gew.-T. | gut | zufriedenstellend | 70 °C | hoch | keine Risse |
| 27,0 Gew.-T. | gut | zufriedenstellend | 70 °C | hoch | keine Risse |
| 30,0 Gew.-T. | gut | zufriedenstellend | 70 °C | hoch | keine Risse |
| 35,0 Gew.-T. | gering | schmierig | 70 °C | hoch | keine Risse |
| 36,5 Gew.-T. | gering | schmierig | 70 °C | hoch | keine Risse |

Nachteilig ist, daß die untersuchten Zusammensetzungen deutlich schlechter aushärten. So ist die Zeit bis zur Transportfähigkeit als auch bis zur Weiterverarbeitung deutlich verlängert. Geringere Beimischungen führen zu einer Absenkung der Viskosität, die jedoch in allen Fällen zu hoch ist, um den Ansprüchen einer Blockmittelzusammensetzung zu genügen. Da die Mischbarkeit des Weichmachers mit FP gering ist, führen höhere Gewichtsanteile des Weichmachers nicht zu einer Senkung der Viskosität. Bei hohen Anteilen zeigt das Material außerdem einen Film des Weichmachers an der Oberfläche, was zu einer schmierigen Haptik führt. Bei sehr hohen Anteilen wirkt sich dies auch negativ auf die Haftung des Materials aus.

In einem weiteren Ansatz wird ein Polyester mit geringerem Molekulargewicht und somit mit geringerer Schmelzviskosität beigemischt. Hierfür wird FP3 gewählt. Die folgende Tabelle 12 gibt die Gewichtsanteile sämtlicher Komponenten, nämlich FP3, FP9 und Weichmacher wieder.

**Tabelle 12:**

| **Probe FP3/FP9/WM** | **Haftung** | **Haptik** | **Schmel zpunkt** | **Viskosität** | **Schwindung** |
|---|---|---|---|---|---|
| 80,0/20,0/0 | gut | mittelmäßig | 70 °C | niedrig | Risse |
| 72,0/18,0/10,0 | gut | mittelmäßig | 70 °C | niedrig | Risse |
| 63,9/24,4/11,7 | gut | mittelmäßig | 70 °C | niedrig | Risse |
| 52,9/33,1/14,0 | gut | mittelmäßig | 70 °C | niedrig | Risse |
| 48,7/36,4/14,9 | gut | mittelmäßig | 70 °C | niedrig | Risse |
| 43,8/40,3/15,9 | gut | mittelmäßig | 70 °C | niedrig | Risse |
| 42,0/38,7/19,3 | gering | schmierig | 70 °C | sehr niedrig | Risse |
| 39,1/44,6/16,3 | gut | mittelmäßig | 70 °C | niedrig | Risse |
| 22,1/58,4/19,5 | gut | mittelmäßig | 70 °C | sehr hoch | Risse |
| 28,2/53,9/17,9 | | mittelmäßig | 70 °C | zu hoch | |
| 27,5/52,5/20,0 | gut | mittelmäßig | 70 °C | sehr niedrig | wenig Risse |

Durch Zugabe des niedermolekularen Polyesters FP3 kann die Viskosität zwar gesenkt werden, trotz Verwendung des Weichmachers treten in diesen Materialien jedoch durchgängig Risse auf. Mit steigendem Weichmacheranteil kann die Zeit bis zur Rissbildung zwar verlängert werden, jedoch nicht die Rissbildung als solche.

In einem weiteren Ansatz wird ein weiterer steifer Polyester verwendet (SP) und mit einem Weichmacher (WM) vermengt. Um die Mischbarkeit zu erhöhen, wird weiterhin ein Phasenvermittler (PV) eingesetzt. Die nachfolgende Tabelle 13 gibt die erzielten Ergebnisse wieder. Mit fortlaufender Probennummerierung steigt der Anteil des Phasenvermittlers, während die anderen beiden Komponenten im Anteil sinken.

**Tabelle 13:**

| **Probe** | **Haftung** | **Haptik** | **Schmelzpunkt** | **Viskosität** | **Schwindung** |
|---|---|---|---|---|---|
| 1 | gering | schmierig | 70 °C | niedrig | Risse |
| 2 | gut | zufriedenstellend | 70 °C | niedrig | wenig Risse |
| 3 | gut | gut | 70 °C | niedrig | keine Risse |

Der Weichmacheranteil in der Mischung unterscheidet sich in allen drei Proben kaum. Durch die Zugabe des Phasenvermittlers können jedoch gewisse Eigenschaftsverbesserungen im Hinblick auf die Vermeidung von Rissen bzw. in Bezug auf eine verbesserte Haptik erzielt werden. Jedoch sind die Eigenschaften der zuvor angeführten Zusammensetzungen nicht optimal.

Die zuvor angeführten weiteren Zusammensetzungen des Standes der Technik weisen somit insgesamt aufgrund ihrer nicht immer positiven Eigenschaften keine Eignung zur Verwendung als Blockmittelzusammensetzung auf.

Vielmehr ist es erst im Rahmen der vorliegenden Erfindung in völlig überraschender Weise gelungen, ein Blockmittel auf Polymerbasis zu entwickeln, das als Ersatz für eine Metalllegierung, insbesondere mit einem Erweichungspunkt von etwa 50 °C, Verwendung finden kann, wobei der Erweichungspunkt der erfindungsgemäßen Zusammensetzungen idealerweise eine Temperatur von 70 °C nicht überschreiten soll, um Verspannungen der Linse bei der Aushärtung zu vermeiden.

Weiterhin zeichnen sich die erfindungsgemäßen Zusammensetzungen gegenüber Zusammensetzungen des Standes der Technik durch einen signifikant verringerten Materialschwund infolge der Aushärtung auf, was zu einer Vermeidung von Rissen im Material sowie zu einer geringen Abweichung entlang der Blockstückachse führt. Zudem zeigen die erfindungsgemäßen Zusammensetzungen eine geringe Viskosität der Schmelze, was zu einer hervorragenden Gießfähigkeit führt. Auch die Aushärtung des Materials ist schnell, was zu einer Transportfähigkeit nach kurzer Zeit, insbesondere nach 20 s, und zu einer raschen Aushärtung für die Weiterverarbeitung führt, welche bereits nach 30 min erfolgen kann. Zudem weisen die erfindungsgemäßen Zusammensetzungen keine wachsartige Haptik auf. Ein weiterer Vorteil der erfindungsgemäßen Zusammensetzungen ist darin zu sehen, daß diese rezykliert werden können bzw. wiederverwendbar sind, was nicht zuletzt in Bezug auf Kosten und Logistik von Vorteil ist.

Zudem können die erfindungsgemäßen Zusammensetzungen in idealer Weise mechanisch von der Linse entfernt werden, da die erfindungsgemäßen Zusammensetzungen ohne größeren Aufwand rückstandsfrei von der Linse und dem Blockstück abgelöst werden können. Zudem können abgelöste Materialpartikel der erfindungsgemäßen Zusammensetzung einfach und rückstandsfrei entfernt werden. Weiterhin weisen die erfindungsgemäßen Zusammensetzungen eine hervorragende Eigensteifigkeit auf, so daß diese den aus der Bearbeitung, wie Drehen, Fräsen, Polieren etc., resultierenden Prozesskräften standhalten können. Insbesondere kommen die mechanischen Eigenschaften der erfindungsgemäßen Zusammensetzungen denen einer Metalllegierung möglichst nahe, wobei die erfindungsgemäßen Zusammensetzungen sogar, wie zuvor angesprochen, wiederverwertet sind und zudem keine toxischen Eigenschaften aufweisen. Insbesondere erfüllen die Zusammensetzungen nach der Erfindung die nachfolgenden Eigenschaften:
- Geringe Formabweichung bei den vorherrschenden Prozesskräften im Bereich der Bearbeitungstemperatur. Diesbezüglich typische Temperaturen sind in Bezug auf die zu bearbeitende Linse und den Blockstückverband insbesondere Raumtemperatur, in Bezug auf das Poliermittel etwa 12 °C und in Bezug auf den Kühlschmierstoff, welcher beispielsweise beim Fräsen bzw. Drehen eingesetzt wird, etwa 35 °C.
- Gute Dämpfungseigenschaften;
- geringe Nachgiebigkeit des Materials und dadurch bedingte geringe Formabweichung (*peak to valley*) (PV); insbesondere überschreitet die Formabweichung nicht den Wert von etwa 5 µm, was der Differenz der tatsächlichen Formabweichung bezüglich einer maschinenbedingten Formabweichung entspricht;
- Widerstandsfähigkeit gegenüber hohen Prozesskräften, wobei die größte Prozesskraft insbesondere während eines Fräsprozesses entsteht.

Darüber hinaus zeichnen sich die erfindungsgemäßen Zusammensetzungen dadurch aus, daß diese zumindest im Wesentlichen inert gegenüber der Atmosphäre einer Coating- bzw. Beschichtungsanlage sind, so daß keine Reaktion des Klebstoffs und keine Kontamination der Atmosphäre bzw. der diesbezüglich eingesetzten Bäder vorliegt.

Zudem stellt die erfindungsgemäße Zusammensetzung kein Gefahrgut hinsichtlich Lagerung, Handhabung und Entsorgung dar. Zudem sind die erfindungsgemäßen Zusammensetzungen stabil gegen Wasserbeaufschlagung, wie sie beispielsweise durch Poliermedien, Kühlemulsion, Drehen etc. vorliegen kann. Zudem sind die erfindungsgemäßen Zusammensetzungen kostengünstig.

Im Rahmen der vorliegenden Erfindung ist es gelungen, eine Zusammensetzung auf Polymerbasis bereitzustellen, welche die negativen Eigenschaften von Metalllegierungen nicht aufweist, wobei gleichzeitig jedoch die positiven Eigenschaften weiterhin vorhanden bzw. sogar noch verbessert werden können.

Insgesamt weisen die erfindungsgemäßen Zusammensetzungen gegenüber den Zusammensetzungen des Standes der Technik signifikante Vorteile auf, so daß es im Rahmen der vorliegenden Erfindung gelungen ist, leistungsfähige Blockmittelzusammensetzungen bereitzustellen, welche sich insbesondere für die Fixierung von Rohlingen für ophthalmische bzw. optische Linsen, vorzugsweise für kunststoffbasierte Brillenglasrohlinge, eignen.

### Anhang

**Verwendete Abkürzungen:**

| | |
|---|---|
| Thermoplastisches Elastomer (TE): | Poly(ethylen-co-vinylacetat), (25 Gew.-% Vinylacetat) |
| Steifer Polyester (SP): | Polyethylenadipat (PEA) |
| Flexibler Polyester (FP): | Polybutylenadipat (PBA) |
| Hochflexibler Polyester (HFP): | Polyhexylenadipat (PHA) |
| Füllstoff A: | SiO₂-Nanopartikel (5 bis 15 nm) |
| Füllstoff B: | Ofenruß |
| Füllstoff C: | Poly(methacrylat) |
| Weiches Additiv 1 (WA1): | Stearylalkohol |
| Weiches Additiv 2 (WA2): | Polyethylenglykoladipat |
| Weichmacher (WM): | Bis-(2-ethylhexyl)adipinsäureester |
| Phasenvermittler (PV): | Poly(ethylen-co-butylen)adipat |

## Patentansprüche

1. Blockmittelzusammensetzung für die Fixierung von Rohlingen für ophthalmische und/oder optische Linsen, vorzugsweise kunststoffbasierten Brillenglasrohlingen, wobei die Zusammensetzung eine Mischung umfaßt, wobei die Mischung enthält:
(a) mindestens ein Polyol (Polyalkohol), wobei die Zusammensetzung das Polyol in Mengen von 20 bis 40 Gew.-%, bezogen auf die Zusammensetzung, enthält, und
(b) mindestens einen organischen Polyester, wobei die Zusammensetzung den organischen Polyester in Mengen von 50 bis 80 Gew.-%, bezogen auf die Zusammensetzung, enthält,
wobei (b) der Polyester mindestens zwei voneinander verschiedene Polyester (b1) und (b2) umfaßt, wobei sich die mindestens zwei voneinander verschiedenen Polyester (b1) und (b2) in mindestens einem Parameter, ausgewählt aus der Gruppe von Molekulargewicht, Hydroxylzahl, Säurezahl, Erweichungspunkt, Glasübergangstemperatur, Schmelzbereich oder Schmelztemperatur, dynamischer Viskosität, Dichte und Kristallinität, voneinander unterscheiden,
wobei (b1) der erste Polyester ein Molekulargewicht im Bereich von 1.500 bis 2.500 Da und (b2) der zweite Polyester ein Molekulargewicht im Bereich von 3.000 bis 4.000 Da aufweisen und
wobei (b1) der erste Polyester und (b2) der zweite Polyester voneinander verschiedene dynamische Viskositäten aufweisen, wobei sich die dynamischen Viskositäten oberhalb des Schmelz- und/oder Glasübergangsbereichs in einem Temperaturbereich von 80 °C bis 130 °C um mindestens 500 mPa·s voneinander unterscheiden.

2. Zusammensetzung nach Anspruch 1,
wobei die Zusammensetzung thermoplastisch ist und/oder wobei die Zusammensetzung hitzeklebrig ist und/oder
wobei die Zusammensetzung einen Schmelzbereich oder eine Schmelztemperatur im Bereich von 50 bis 120 °C, insbesondere 55 bis 110 °C, vorzugsweise 60 bis 100 °C, bevorzugt 60 bis 90 °C, besonders bevorzugt 65 bis 85 °C, aufweist.

3. Zusammensetzung nach Anspruch 1 oder 2,
wobei die Zusammensetzung oberhalb des Schmelzbereiches oder der Schmelztemperatur, insbesondere oberhalb einer Temperatur von 60 °C bis 100 °C, fließfähig ist und/oder wobei die Zusammensetzung oberhalb des Schmelzbereiches oder der Schmelztemperatur, insbesondere bei einer Temperatur von 60 bis 100 °C, eine dynamische Viskosität im Bereich von 100 bis 50.000 mPa·s, insbesondere 250 bis 30.000 mPa·s, vorzugsweise 500 bis 25.000 mPa·s, bevorzugt 750 bis 20.000 mPa·s, besonders bevorzugt 1.000 bis 18.000 mPa·s, aufweist und/oder
wobei die Zusammensetzung eine Dichte p, bestimmt bei einer Temperatur von 20 °C, im Bereich von 0,9 bis 1,5 g/cm³, insbesondere 1 bis 1,4 g/cm³, vorzugsweise 1,1 bis 1,3 g/cm³, bevorzugt 1,2 g/cm³, aufweist.

4. Zusammensetzung nach einem der vorangehenden Ansprüche,
wobei die Zusammensetzung (a) das Polyol in Mengen von 25 bis 35 Gew.-%, bezogen auf die Zusammensetzung, enthält und/oder
wobei (a) das Polyol eine Hydroxylzahl im Bereich von 350 bis 600 mg KOH/g, insbesondere 400 bis 550 mg KOH/g, vorzugsweise 425 bis 525 mg KOH/g, bevorzugt 450 bis 550 mg KOH/g, aufweist und/oder
wobei (a) das Polyol eine Säurezahl im Bereich von 1 bis 15 mg KOH/g, insbesondere 2 bis 12 mg KOH/g, vorzugsweise 5 bis 10 mg KOH/g, aufweist und/oder wobei (a) das Polyol eine Säurezahl von höchstens 15 mg KOH/g, insbesondere höchstens 12 mg KOH/g, vorzugsweise höchstens 10 mg KOH/g, aufweist und/oder
wobei (a) das Polyol ein Hydroxyläquivalentgewicht von 100 bis 135, insbesondere 105 bis 130, vorzugsweise 110 bis 125, bevorzugt 112 bis 125, aufweist und/oder
wobei (a) das Polyol eine Brookfield-Viskosität von 1.000 bis 3.500 mPa·s, insbesondere 1.500 bis 3.000 mPa·s, vorzugsweise 1.700 bis 2.500 mPa·s, bei einer Temperatur von 25 °C und bei 70 % in Propylenglykolmonomethyletheracetat (PM-Acetat), aufweist und/oder
wobei (a) das Polyol einen Schmelzbereich oder eine Schmelztemperatur im Bereich von 10 bis 120 °C, insbesondere 20 bis 100 °C, vorzugsweise 30 bis 90 °C, bevorzugt 40 bis 80 °C, besonders bevorzugt 50 bis 60 °C, aufweist.

5. Zusammensetzung nach einem der vorangehenden Ansprüche,
wobei (a) das Polyol das Reaktionsprodukt von Bisphenol-A-Epoxid einerseits und Dimethylolpropionsäure andererseits ist, insbesondere wobei (a) das Polyol mindestens zwei Bisphenol-A-Einheiten, vorzugsweise zwei Bisphenol-A-Einheiten, und mindestens eine Dimethylolpropionsäure-Einheit, vorzugsweise zwei Dimethylolpropionsäure-Einheiten, aufweist und/oder
wobei (a) das Polyol von Bisphenol-A und Dimethylolpropionsäure abgeleitete Einheiten aufweist oder vorzugsweise hieraus besteht und/oder
wobei (a) das Polyol die nachfolgende Formel (i) aufweist:

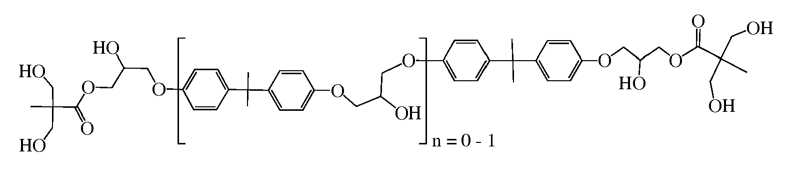

6. Zusammensetzung nach einem der vorangehenden Ansprüche, wobei die Zusammensetzung den (b) organischen Polyester in Mengen von 60 bis 80 Gew.-%, bevorzugt 65 bis 75 Gew.-%, bezogen auf die Zusammensetzung, enthält.

7. Zusammensetzung nach einem der vorangehenden Ansprüche,
wobei die mindestens zwei voneinander verschiedenen Polyester (b1) und (b2) in dem sie unterscheidenden Parameter um mindestens 2 %, insbesondere mindestens 5 %, vorzugsweise mindestens 10%, bevorzugt mindestens 15 %, voneinander abweichen, bezogen auf den zahlenmäßig kleineren Wert des die Polyester (b1) und (b2) unterscheidenden Parameter, und/oder
wobei (b1) der erste Polyester ein amorpher Polyester, insbesondere ein amorpher Copolyester, ist oder wobei (b1) der erste Polyester ein teilkristalliner Polyester, insbesondere ein teilkristalliner Copolyester, ist und/oder
wobei (b2) der zweite Polyester ein teilkristalliner oder kristalliner, vorzugsweise ein teilkristalliner Polyester, insbesondere ein teilkristalliner oder kristalliner, vorzugsweise ein teilkristalliner Copolyester, ist.

8. Zusammensetzung nach einem der vorangehenden Ansprüche,
wobei die Zusammensetzung (b1) den ersten Polyester in Mengen von 1 bis 70 Gew.-%, insbesondere 1 bis 60 Gew.-%, vorzugsweise 1 bis 50 Gew.-%, bevorzugt 2 bis 40 Gew.-%, besonders bevorzugt 5 bis 35 Gew.-%, ganz besonders bevorzugt 10 bis 30 Gew.-%, noch weiter bevorzugt 20 Gew.-%, bezogen auf die Zusammensetzung, enthält und/oder
wobei die Zusammensetzung (b2) den zweiten Polyester in Mengen von 5 bis 70 Gew.-%, insbesondere 10 bis 70 Gew.-%, vorzugsweise 20 bis 70 Gew.-%, bevorzugt 30 bis 70 Gew.-%, besonders bevorzugt 35 bis 65 Gew.-%, ganz besonders bevorzugt 40 bis 60 Gew.-%, noch weiter bevorzugt 50 Gew.-%, bezogen auf die Zusammensetzung, enthält und/oder
wobei die Zusammensetzung (b1) den ersten Polyester und (b2) den zweiten Polyester in einem gewichtsbezogenen Mengenverhältnis von [(b1) : (b2)] oder von [(b2): (b1)] im Bereich von 2 : 1 bis 1 : 8, insbesondere 1,5 : 1 bis 1 : 7, vorzugsweise 1 : 1 bis 1 : 6, bevorzugt 1 : 1 bis 1 : 4, besonders bevorzugt 1 : 1 bis 1 : 3, ganz besonders bevorzugt 1 : 2,5, enthält und/oder
wobei die Zusammensetzung (a) den Polyol, (b1) den ersten Polyester und (b2) den zweiten Polyester in einem gewichtsbezogenen Mengenverhältnis von 1,5 : 1 : 2,5 enthält.

9. Zusammensetzung nach einem der vorangehenden Ansprüche,
wobei (b1) der erste Polyester ein Molekulargewicht im Bereich von 1.800 bis 2.300 Da, vorzugsweise von 2.000 Da, aufweist und/oder wobei (b2) der zweite Polyester ein Molekulargewicht im Bereich von 3. 3.300 bis 3.800 Da, vorzugsweise von 3.500 Da, aufweist und/oder
wobei (b1) der erste Polyester eine Hydroxylzahl im Bereich von 45 bis 65 mg KOH/g, insbesondere 50 bis 60 mg KOH/g , aufweist und/oder wobei (b2) der zweite Polyester eine Hydroxylzahl im Bereich von 20 bis 40 mg KOH/g, insbesondere 27 bis 34 mg KOH/g, aufweist und/oder
wobei (b1) der erste Polyester eine Säurezahl im Bereich von 5 bis 15 mg KOH/g, insbesondere 6 bis 14 mg KOH/g, vorzugsweise 8 bis 12 mg KOH/g, aufweist und/oder wobei (b1) der erste Polyester eine Säurezahl von höchstens 15 mg KOH/g, insbesondere höchstens 14 mg KOH/g, vorzugsweise höchstens 12 mg KOH/g, aufweist und/oder wobei (b2) der zweite Polyester eine Säurezahl im Bereich von 1 bis 4 mg KOH/g, insbesondere 1 bis 3 mg KOH/g, vorzugsweise 1 bis 2 mg KOH/g, aufweist und/oder wobei (b2) der zweite Polyester eine Säurezahl von höchstens 4 mg KOH/g, insbesondere höchstens 3 mg KOH/g, vorzugsweise höchstens 2 mg KOH/g, aufweist und/oder
wobei (b2) der zweite Polyester, insbesondere verschieden von dem ersten Polyester (b1), einen Schmelzbereich oder eine Schmelztemperatur im Bereich von 45 bis 65 °C, insbesondere 50 bis 60 °C, vorzugsweise von 55 °C, aufweist und/oder
wobei sich die dynamischen Viskositäten des (b1) ersten Polyesters und des (b2) zweiten Polyesters oberhalb des Schmelz- und/oder Glasübergangsbereichs in einem Temperaturbereich von 80 °C bis 130 °C um mindestens 1.000 mPa·s, bevorzugt um mindestens 5.000 mPa·s, besonders bevorzugt um mindestens 10.000 mPa·s, voneinander unterscheiden und/oder wobei sich die dynamischen Viskositäten des (b1) ersten Polyesters und des (b2) zweiten Polyesters oberhalb des Schmelz- und/oder Glasübergangsbereichs in einem Temperaturbereich von 80 °C bis 130 °C in einem Bereich von 500 bis 10.000 mPa·s, insbesondere 500 bis 8.000 mPa·s, vorzugsweise 500 bis 6.000 mPa·s, bevorzugt 1.000 bis 5.000 mPa·s, voneinander unterscheiden und/oder wobei (b1) der erste Polyester oberhalb des Schmelz- und/oder Glasübergangsbereichs in einem Temperaturbereich von 80 °C bis 130 °C eine geringere dynamische Viskosität als (b2) der zweite Polyester aufweist.

10. Verfahren zur Fixierung von Rohlingen für ophthalmische und/oder optische Linsen, vorzugsweise von kunststoffbasierten Brillenglasrohlingen, wobei
(a) zunächst der Rohling über oder seitlich zu einem Träger, insbesondere einem Blockstück, angeordnet wird derart, daß die zu bearbeitende Seite und/oder Fläche des Rohlings vom Träger abgewandt ist und derart, daß zwischen dem Träger einerseits und dem Rohling andererseits, gegebenenfalls unter Verwendung mindestens eines Dichtmittels, ein verfüllbarer Hohlraum resultiert;
(b) anschließend der Hohlraum mit einer vorzugsweise durch Erwärmung verflüssigten und/oder in einen fließfähigen Zustand überführten Zusammensetzung, wie in den Ansprüchen 1 bis 9 definiert, zumindest im wesentlichen vollständig verfüllt wird; und
(c) nachfolgend die Zusammensetzung vorzugsweise durch Abkühlung zum Erhalt eines Verbundes, aufweisend den Träger mit dem darauf mittels der Zusammensetzung fixierten Rohling, ausgehärtet und/ oder verfestigt wird.

11. Verbund, aufweisend mindestens einen Träger, insbesondere ein Blockstück, sowie einen auf dem Träger fixierten Rohling für ophthalmische und/oder optische Linsen, vorzugsweise einen kunststoffbasierten Brillenglasrohling, wobei der Rohling mit einer Zusammensetzung, wie in den Ansprüchen 1 bis 9 definiert, auf dem Träger fixiert ist.

12. Verfahren zur Herstellung einer ophthalmischen und/oder optischen Linse, vorzugsweise eines kunststoffbasierten Brillenglases, wobei
(a) zunächst ein Rohling für ophthalmische und/oder optische Linsen, vorzugsweise ein kunststoffbasierter Brillenglasrohling, über oder seitlich zu einem Träger, insbesondere einem Blockstück, angeordnet wird derart, daß die zu bearbeitende Seite und/oder Fläche des Rohlings vom Träger abgewandt ist und derart, daß zwischen dem Träger einerseits und dem Rohling andererseits, gegebenenfalls unter Verwendung mindestens eines Dichtmittels, ein verfüllbarer Hohlraum resultiert;
(b) anschließend der Hohlraum mit einer vorzugsweise durch Erwärmung verflüssigten und/oder in einen fließfähigen Zustand überführten Zusammensetzung, wie in den Ansprüchen 1 bis 9 definiert, zumindest im wesentlichen vollständig verfüllt wird;
(c) nachfolgend die Zusammensetzung vorzugsweise durch Abkühlung zum Erhalt eines Verbundes, aufweisend den Träger mit dem darauf mittels der Zusammensetzung fixierten Rohling, ausgehärtet und/oder verfestigt wird; und
(d) schließlich eine Bearbeitung des auf dem Träger fixierten Rohlinges, insbesondere mittels Zerspanen, Fräsen, Schleifen, Polieren oder dergleichen, erfolgt und auf diese Weise die ophthalmische und/oder optische Linse, vorzugsweise das kunststoffbasierte Brillenglas, erhalten wird.

13. Verwendung einer Blockmittelzusammensetzung, wie in einem der Ansprüche 1 bis 9 definiert, in der Herstellung von ophthalmischen und/oder optischen Linsen, vorzugsweise von kunststoffbasierten Brillengläsern.

14. Verwendung einer Blockmittelzusammensetzung, wie in einem der Ansprüche 1 bis 9 definiert, für die Bearbeitung von Rohlingen für ophthalmische und/oder optische Linsen, vorzugsweise von kunststoffbasierten Brillenglasrohlingen, und/oder für die Herstellung von ophthalmischen und/oder optischen Linsen, vorzugsweise von kunststoffbasierten Brillengläsern, zur Fixierung des Rohlings auf einem Träger, insbesondere einem Blockstück.

## Claims

1. A blocking agent compound for fixing blanks for ophthalmic and/or optical lenses, preferably plastics-based spectacle lens blanks, wherein the compound comprises a mixture, wherein the mixture contains:
(a) at least one polyol (polyalcohol), wherein the compound contains the polyol in quantities of 20 to 40 % by weight, relative to the compound, and
(b) at least one organic polyester, wherein the compound contains the organic polyester in quantities of 50 to 80 % by weight, relative to the compound,
wherein (b) the polyester comprises at least two mutually different polyesters (b1) and (b2), wherein the at least two mutually different polyesters (b1) and (b2) differ from one another in at least one parameter selected from the group of molecular weight, hydroxyl number, acid number, softening point, glass transition temperature, melting range or melting temperature, dynamic viscosity, density and crystallinity,
wherein (b1) the first polyester exhibits a molecular weight in the range of 1500 to 2500 Da and (b2) the second polyester exhibits a molecular weight in the range of 3000 to 4000 Da and
wherein (b1) the first polyester and (b2) the second polyester exhibit mutually different dynamic viscosities, wherein the dynamic viscosities differ from one another by at least 500 mPa·s above the melting and/or glass transition range in a temperature range from 80 °C to 130 °C.

2. The compound according to claim 1,
wherein the compound is a thermoplastic and/or wherein the compound is thermos-tacky and/or
wherein the compound exhibits a melting range or a melting temperature in the range of 50 to 120 °C, in particular 55 to 110 °C, preferably 60 to 100 °C, preferably 60 to 90 °C, particularly preferably 65 to 85 °C.

3. The compound according to claim 1 or 2,
wherein the compound is flowable above the melting range or the melting temperature, particularly above a temperature of 60 °C to 100 °C, and/or wherein the compound has a dynamic viscosity in the range of 100 to 50,000 mPa·s, in particular 250 to 30,000 mPa·s, preferably 500 to 25,000 mPa·s, preferably 750 to 20,000 mPa·s, particularly preferably 1,000 to 18,000 mPa·s above the melting range or the melting temperature, in particular at a temperature of 60 to 100 °C and/or
wherein the compound has a density p, determined at a temperature of 20 °C, in the range from 0.9 to 1.5 g/cm³, in particular 1 to 1.4 g/cm³, preferably 1.1 to 1.3 g/cm³, preferably about 1.2 g/cm³.

4. The compound according to one of the preceding claims,
wherein the compound (a) contains the polyol in quantities of 25 to 35 % by weight relative to the compound and/or
wherein (a) the polyol has a hydroxyl number in the range of 350 to 600 mg KOH/g, particularly 400 to 550 mg KOH/g, preferably 425 to 525 mg KOH/g, preferably 450 to 550 mg KOH/g, and/or
wherein (a) the polyol has an acid number in the range of 1 to 15 mg KOH/g, particularly 2 to 12 mg KOH/g, preferably 5 to 10 mg KOH/g, and/or wherein (a) the polyol has an acid number of maximum 15 mg KOH/g, particularly maximum 12 mg KOH/g, preferably maximum 10 mg KOH/g, and/or
wherein (a) the polyol has a hydroxyl equivalent weight of 100 to 135, particularly 105 to 130, preferably 110 to 125, preferably 112 to 125, and/or
wherein (a) the polyol has a Brookfield viscosity of 1,000 to 3,500 mPa·s, particularly 1,500 to 3,000 mPa·s, preferably 1,700 to 2,500 mPa·s, at a temperature of 25 °C and at 70 % in propylene glycol monomethyl ether acetate (PM acetate), and/or
wherein (a) the polyol has a melting range or a melting temperature in the range of 10 to 120 °C, particularly 20 to 100 °C, preferably 30 to 90 °C, preferably 40 to 80 °C, particularly preferably 50 to 60 °C.

5. The compound according to one of the preceding claims,
wherein (a) the polyol is the reaction product of bisphenol-A-epoxide, on the one hand, and dimethylolpropionic acid, on the other hand, in particular wherein (a) is the polyol of at least two bisphenol-A-units, preferably two bisphenol-A-units, and at least one dimethylolpropionic acid unit, preferably two dimethylol-propionic acid units, and/or
wherein (a) the polyol comprises bisphenol-A and dimethylolpropionic acid derived units or preferably consists thereof and/or
wherein (a) the polyol has the following formula (i):

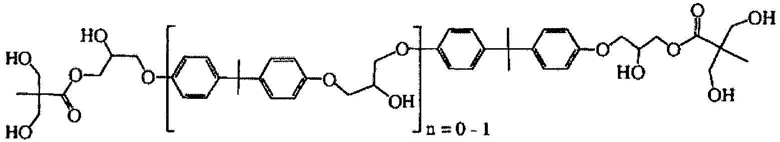

6. The compound according to one of the preceding claims, wherein the compound contains the (b) organic polyester in quantities of 60 to 80 % by weight, preferably 65 to 75 % by weight, relative to the compound.

7. The compound according to one of the preceding claims,
wherein the at least two mutually different polyesters (b1) and (b2) differ from one another in the parameter by which they are distinguished by at least 2 %, in particular at least 5 %, preferably at least 10 %, preferably at least 15 %, based on the numerically smaller value of the parameter distinguishing the polyesters (b1) and (b2), and/or
wherein (b1) the first polyester is an amorphous polyester, particularly an amorphous copolyester, or wherein (b1) the first polyester is a semi-crystalline polyester, in particular a semi-crystalline copolyester, and/or
wherein (b2) the second polyester is a semi-crystalline or crystalline, preferably a semi-crystalline polyester, in particular a semi-crystalline or crystalline, preferably a semi-crystalline copolyester.

8. The compound according to one of the preceding claims,
wherein the compound (b1) contains the first polyester in quantities of 1 to 70 % by weight, particularly 1 to 60 % by weight, preferably 1 to 50 % by weight, preferably 2 to 40 % by weight, particularly preferably 5 to 35 % by weight, quite particularly preferably 10 to 30 % by weight, still more preferably 20 % by weight, relative to the compound, and/or
wherein the compound (b2) contains the second polyester in quantities of 5 to 70 % by weight, in particular 10 to 70 % by weight, preferably 20 to 70 % by weight, preferably 30 to 70 % by weight, particularly preferably 35 to 65 % by weight, quite particularly preferably 40 to 60 % by weight, still more preferably 50 % by weight, relative to the compound, and/or
wherein the compound (b1) contains the first polyester and (b2) the second polyester in a weight-related quantity ratio of [(b1) : (b2)] or [(b2) : (b1)] in the range of 2 : 1 to 1 : 8, in particular 1.5 : 1 to 1 : 7, preferably 1 : 1 to 1 : 6, preferably 1 : 1 to 1 : 4, particularly preferably 1 : 1 to 1 : 3, quite particularly preferably 1 : 2.5 and/or
wherein the compound contains (a) the polyol, (b1) the first polyester and (b2) the second polyester in a weight-related quantity ratio of 1.5 : 1 : 2.5.

9. The compound according to one of the preceding claims,
wherein (b1) the first polyester exhibits a molecular weight in the range of 1,800 to 2,300 Da, preferably of 2,000 Da, and/or wherein (b2) the second polyester exhibits a molecular weight in the range of 3,300 to 3,800 Da, preferably of 3,500 Da, and/or
wherein (b1) the first polyester has a hydroxyl number in the range of 45 to 65 mg KOH/g, particularly 50 to 60 mg KOH/g, and/or wherein (b2) the second polyester has a hydroxyl number in the range of 20 to 40 mg KOH/g, particularly 27 to 34 mg KOH/g, and/or
wherein (b1) the first polyester has an acid number in the range of 5 to 15 mg KOH/g, in particular 6 to 14 mg KOH/g, preferably 8 to 12 mg KOH/g, and/or wherein (b1) the first polyester has an acid number of maximum 15 mg KOH/g, in particular maximum 14 mg KOH/g, preferably maximum 12 mg KOH/g, and/or wherein (b2) the second polyester has an acid number in the range of 1 to 4 mg KOH/g, in particular 1 to 3 mg KOH/g, preferably 1 to 2 mg KOH/g, and/or wherein (b2) the second polyester has a maximum acid number of 4 mg KOH/g, particularly maximum 3 mg KOH/g, preferably maximum 2 mg KOH/g, and/or
wherein (b2) the second polyester, in particular different from the first polyester (b1), has a melting range or a melting temperature in the range of 45 to 65 °C, particularly 50 to 60 °C, preferably 55 °C, and/or
wherein the dynamic viscosities of the (b1) first polyester and the (b2) second polyester above the melting and/or glass transition range in a temperature range of 80 °C to 130 °C differ from one another by at least 1,000 mPa·s, preferably by at least 5,000 mPa·s, particularly preferably by at least 10,000 mPa·s, and/or wherein the dynamic viscosities of the (b1) first polyester and of the (b2) second polyester above the melting and/or glass transition range in a temperature range from 80 °C to 130 °C differ from one another in a range of 500 to 10,000 mPa·s, in particular 500 to 8,000 mPa·s, preferably 500 to 6,000 mPa·s, preferably 1,000 to 5,000 mPa·s, and/or wherein (b1) the first polyester above the melting and/or glass transition range in a temperature range from 80 °C to 130 °C has a lower dynamic viscosity than (b2) the second polyester.

10. A method for fixing blanks for ophthalmic and/or optical lenses, preferably of plastics-based spectacle lens blanks, wherein
(a) the blank is initially arranged above or to the side of a carrier, in particular a block piece, in such a manner that the side and/or surface of the blank to be machined faces away from the carrier and in such a manner that between the carrier, on the one hand, and the blank, on the other, a cavity that can be filled results, possibly using at least one sealing means;
(b) the cavity is then filled, at least substantially fully, with a compound liquefied and/or converted into a flowable state preferably by heating, as defined in claims 1 to 9; and
(c) the compound is then cured and/or hardened advantageously by cooling to obtain a composite material, exhibiting the carrier with the blank fixed thereto by means of the compound.

11. The composite, comprising at least one carrier, in particular a block piece, and a blank fixed to the carrier for ophthalmic and/or optical lenses, preferably a plastics-based spectacle lens blank, wherein the blank is fixed to the carrier with a compound, as defined in claims 1 to 9.

12. A method for producing an ophthalmic and/or optical lens, preferably a plastics-based spectacle lens, wherein
(a) a blank for ophthalmic and/or optical lenses, preferably a plastics-based spectacle lens blank, is initially arranged above or to the side of a carrier, in particular a block piece, in such a manner that the side and/or surface of the blank to be machined faces away from the carrier and in such a manner that between the carrier, on the one hand, and the blank on the other, a cavity that can be filled results, possibly using at least one sealing means;
(b) the cavity is then filled, at least substantially fully, with a compound liquefied and/or converted into a flowable state preferably by heating, as defined in claims 1 to 9; and
(c) the compound is then cured and/or hardened advantageously by cooling to obtain a composite material, exhibiting the carrier with the blank fixed thereto by means of the compound; and
(d) finally the blank fixed to the carrier is machined, in particular by means of machining, milling, grinding, polishing or the like, and in this way the ophthalmic and/or optical lens, preferably the plastics-based spectacle lens, is obtained.

13. Use of a blocking agent compound, as defined in one of claims 1 to 9, in the production of ophthalmic and/or optical lenses, preferably of plastics-based spectacle lenses.

14. The use of a blocking agent compound as defined in one of claims 1 to 9 for machining blanks for ophthalmic and/or optical lenses, preferably of plastics-based spectacle lens blanks, and/or for the manufacture of ophthalmic and/or optical lenses, preferably plastics-based spectacle lenses, for fixing blanks to a carrier, in particular a block piece.

## Revendications

1. Composition d'un agent bloquant, destiné à fixer des ébauches pour des lentilles ophtalmiques et/ou optiques, de préférence des ébauches de verres de lunettes à base de matière plastique, la composition comprenant un mélange, le mélange contenant :
(a) de préférence un polyol (polyalcool), la composition contenant le polyol dans des quantités de 20 à 40 % en poids, en rapport à la composition et
(b) au moins un polyester organique, la composition contenant le polyester organique dans des quantités de 50 à 80 % en poids, en rapport à la composition,
(b) le polyester comprenant au moins deux polyesters différents (b1) et (b2), les au moins deux polyesters (b1) et (b2) différents l'un de l'autre étant différents l'un de l'autre par au moins paramètre, choisi dans le groupe comprenant : le poids moléculaire, l'indice d'hydroxyle, l'indice d'acidité, le point de ramollissement, la température de transition vitreuse, le régime de fusion ou la température de fusion, la viscosité dynamique, la densité et la cristallinité,
(b1) le premier polyester présentant un poids moléculaire de l'ordre de 1.500 à 2.500 Da et (b2) le deuxième polyester présentant un poids moléculaire de l'ordre de 3.000 à 4.000 Da et
(b1) le premier polyester et (b2) le deuxième polyester faisant preuve de viscosités dynamiques différentes l'une de l'autre, au-delà de la plage de fusion et/ou au-delà de la plage de transition vitreuse, les viscosités dynamiques étant différentes l'une de l'autre d'au moins 500 mPa·s dans un ordre de température de 80 °C à 130 °C.

2. Composition selon la revendication 1,
la composition étant thermoplastique et/ou la composition étant collante à la chaleur et/ou
la composition présentant une plage de fusion ou une température de fusion de l'ordre de 50 à 120 °C, notamment de 55 à 110 °C, de préférence de 60 à 100 °C, de manière préférée de 60 à 90 °C, de manière particulièrement préférée, de 65 à 85 °C.

3. Composition selon la revendication 1 ou la revendication 2,
au-delà de la plage de fusion ou de la température de fusion, notamment au-delà d'une température de 60 °C à 100 °C, la composition étant fluide et/ou au-delà de la plage de fusion ou de la température de fusion, notamment à une température de 60 à 100 °C, la composition faisant preuve d'une viscosité dynamique de l'ordre de 100 à 50.000 mPa·s, notamment de 250 à 30.000 mPa·s, de préférence de 500 à 25.000 mPa·s, de manière préférée de 750 à 20.000 mPa·s, de manière particulièrement préférée, de 1.000 à 18.000 mPa·s et/ou
la composition faisant preuve d'une densité ρ, déterminée à une température de 20 °C de l'ordre de 0,9 à 1, 5 g/cm³, notamment de 1 à 1,4 g/cm³, de préférence de 1,1 à 1,3 g/cm³, de manière préférée, de 1,2 g/cm³.

4. Composition selon l'une quelconque des revendications précédentes,
la composition (a) contenant le polyol dans des quantités de 25 à 35 % en poids, en rapport à la composition et/ou
(a) le polyol présentant un indice d'hydroxyle de l'ordre de 350 à 600 mg KOH/g, notamment de 400 à 550 mg KOH/g, de préférence de 425 à 525 mg/ KOH/g, de manière préférée de 450 à 550 mg KOH/g et/ou
(a) le polyol présentant un indice d'acidité de l'ordre de 1 à 15 mg KOH/g, notamment de 2 à 12 mg KOH/g, de préférence de 5 à 10 mg KOH/g, et ou (a) le polyol présentant un indice d'acidité d'au maximum 15 mg KOH/g, notamment d'un maximum de 12 mg KOH/g, de préférence d'au maximum 10 mg KOH/g et/ou
(a) le polyol présentant un poids équivalent d'hydroxyle de 100 à 135, notamment de 105 à 130, de préférence de 110 à 125, de manière préférée de 112 à 125 et/ou
(a) le polyol présentant une viscosité de Brookfield de 1.000 à 3.500 mPa·s, notamment de 1.500 à 3.000 mPa·s, de préférence de 1.700 à 2.500 mPa·s, à une température de 25 °C et à 70 % en propylène glycol monométhyle éther acétate (PM-acétate) et/ou
(a) le polyol présentant une plage de fusion ou une température de fusion de l'ordre de 10 à 120 °C ; notamment de 20 à 100 °C, de préférence de 30 à 90 °C, de manière préférée de 40 à 80 °C, de manière particulièrement préférée de 50 à 60 °C.

5. Composition selon l'une quelconque des revendications précédentes,
(a) le polyol comportant le produit réactif de la résine bisphénol-A-époxy d'une part et de l'acide diméthylolpropionique d'autre part, le polyol comportant au moins deux unités de bisphénol-A, de préférence deux unités de bisphénol-A et au moins une unité d'acide diméthylolpropionique, de préférence deux unités d'acide diméthylolpropionique et/ou
(a) le polyol comportant des unités dérivées de bisphénol-A et d'acide diméthylolpropionique ou en est constitué de préférence et/ou
(a) le polyol présentant la formule (i) suivante :

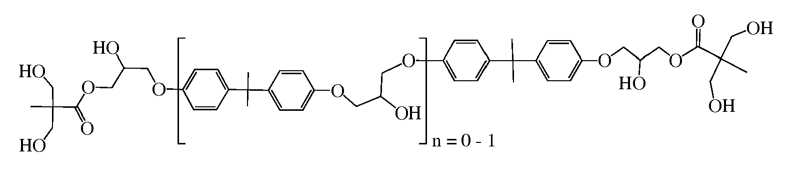

6. Composition selon l'une quelconque des revendications précédentes, la composition contenant le polyester organique (b) dans des quantités de 60 à 80 % en poids, de préférence de 65 à 75 % en poids, en rapport à la composition.

7. Composition selon l'une quelconque des revendications précédentes,
les au moins deux polyesters (b1) et (b2) différents l'un de l'autre en ce que des paramètres qui se différencient sont divergents d'au moins 2 %, notamment d'au moins 5 %, de préférence d'au moins 10 %, de manière particulièrement préférée d'au moins 15 %, en rapport à la plus petite valeur numériquement inférieure du paramètre différenciant les polyesters (b1) et (b2) et/ou
(b1) le premier polyester étant un polyester amorphe, notamment un co-polyester ou (b1) le premier polyester étant un polyester semicristallin, notamment un co-polyester semicristallin et/ou
(b2) le deuxième polyester étant un polyester semicristallin ou cristallin, de préférence un polyester semicristallin, notamment un co-polyester semicristallin ou cristallin, de préférence semicristallin.

8. Composition selon l'une quelconque des revendications précédentes,
la composition (b1) contenant le premier polyester dans des quantités de 1 à 70 % en poids, notamment de 1 à 60 % en poids, de préférence de 1 à 50 % en poids, de manière préférée de 2 à 40 % en poids, de manière particulièrement préférée de 5 à 35 % en poids, de manière tout particulièrement préférée de 10 à 30 % en poids, de manière encore plus préférée de 20 % en poids, en rapport à la composition et/ou
la composition (b2) contenant le deuxième polyester dans des quantités de 5 à 70 % en poids, notamment de 10 à 70 % en poids, de préférence de 20 à 70 % en poids, de manière préférée de 30 à 70 % en poids, de manière particulièrement préférée de 35 à 65 % en poids, de manière tout particulièrement préférée de 40 à 60 % en poids, de manière encore plus préférée de 50 % en poids, en rapport à la composition et/ou
la composition (b1) contenant le première polyester et (b2) le deuxième polyester dans une proportion quantitative, rapportée au poids de [(b1) : (b2)] ou de [(b2) : (b1)] de l'ordre de 2 : 1 à 1 : 8 ; notamment de 1,5 : 1 à 1 : 7, de préférence de 1 : 1 à 1 : 6, de manière préférée de 1 : 1 à 1 : 4, de manière particulièrement préférée de 1 : 1 à 1 : 3, de manière tout particulièrement préférée de 1 : 2,5, et/ou
la composition (a) comportant le polyol, (b1) le premier polyester et (b2) le deuxième polyester dans une proportion quantitative, rapportée au poids de l'ordre de 1,5 : 1 : 2,5.

9. Composition selon l'une quelconque des revendications précédentes,
(b1) le premier polyester présente un poids moléculaire de l'ordre de 1.800 à 2.300 Da, de préférence de 2.000 Da et/ou (b2) le deuxième polyester présentant un poids moléculaire de l'ordre de 3.300 à 3.800 Da, de préférence de 3.500 Da et/ou
(b1) le premier polyester présentant un indice d'hydroxyle de l'ordre de 45 à 65 mg KOH/g, notamment de 50 à 60 mg KOH/g et/ou (b2) le deuxième polyester présentant un indice hydroxyle de l'ordre de 20 à 40 mg KOH/g, notamment de 27 à 34 mg KOH/g et/ou
(b1) le premier polyester présentant un indice d'acidité de l'ordre de 5 à 15 mg KOH/g, notamment de 6 à 14 mg KOH/g, de préférence de 8 à 12 mg KOH/g et/ou (b1) le premier polyester présentant un indice d'acidité d'au maximum 15 mg KOH/g, notamment d'un maximum de 14 mg KOH/g, de préférence d'un maximum de 12 mg KOH/g et/ou (b2) le deuxième polyester présentant un indice d'acidité de l'ordre de 1 à 4 mg KOH/g, notamment de 1 à 3 mg KOH/g, de préférence de 1 à 2 mg KOH/g et/ou (b2) le deuxième polyester présentant un indice d'acidité d'un maximum de 4 mg KOH/g, notamment d'un maximum de 3 mg KOH/g, de préférence d'un maximum de 2 mg KOH/g et/ou
(b2) le deuxième polyester, notamment différent du premier polyester (b1) présentant une plage de fusion ou une température de fusion de l'ordre de 45 à 65 °C, notamment de 50 à 60 °C, de préférence de 55 °C et/ou
au-delà de la plage de fusion et/ou de transition vitreuse, les viscosités dynamiques du (b1) premier polyester et du (b2) deuxième polyester se différenciant l'une de l'autre dans un ordre de température de 80 °C à 130 °C d'au moins 1.000 mPa·s, de préférence d'au moins 5.000 mPa·s, de manière particulièrement préférée d'au moins 10.000 mPa·s et/ou au-delà de la plage de fusion et/ou de transition vitreuse, les viscosités dynamiques du (b1) premier polyester et du (b2) deuxième polyester se différenciant l'une de l'autre dans un ordre de température de 80 °C à 130 °C d'un ordre de 500 à 10.000 mPa·s, notamment de 500 à 8.000 mPa·s, de préférence de 500 à 6.000 mPa·s, de manière préférée de 1.000 à 5.000 mPa·s et/ou au-delà de la plage de fusion et/ou de transition vitreuse, (b1) dans un ordre de température de 80 °C à 130 °C, le premier polyester faisant preuve d'une viscosité dynamique plus faible que (b2) le deuxième polyester.

10. Procédé destiné à fixer des ébauches pour des lentilles ophtalmiques et/ou optiques, de préférence d'ébauches de verres de lunettes sur base de matière plastique, lors duquel
(a) on place d'abord l'ébauche au-dessus ou latéralement d'un support, notamment d'une pièce en bloc de telle sorte que la face et/ou la surface à usiner de l'ébauche soit opposée au support et de telle sorte qu'entre le support d'une part et l'ébauche d'autre part, le cas échéant en utilisant au moins un agent d'étanchéité, il résulte une cavité remplissable ;
(b) par la suite, on remplit de manière au moins sensiblement complète la cavité d'une composition liquéfiée par échauffement et/ou transférée dans un état fluide, telle que définie dans les revendications 1 à 9 ; et
(c) on fait durcir et/ou solidifier ensuite la composition de préférence par refroidissement, pour obtenir un composite, comportant le support avec l'ébauche fixée dessus au moyen de la composition.

11. Composite, comportant au moins un support, notamment une pièce en bloc, ainsi qu'une ébauche pour des lentilles ophtalmiques et/ou optiques, de préférence une ébauche pour des verres de lunettes à base de matière plastique, fixée sur le support, l'ébauche étant fixée sur le support à l'aide d'une composition, telle que définie dans les revendications 1 à 9.

12. Procédé destiné à fabriquer une ébauche pour des lentilles ophtalmiques et/ou optiques, de préférence une ébauche pour des verres de lunettes à base de matière plastique, lors duquel
(a) on place d'abord une ébauche pour des lentilles ophtalmiques et/ou optiques, de préférence une ébauche pour des verres de lunettes à base de matière plastique au-dessus ou latéralement d'un support, notamment d'une pièce en bloc, de telle sorte que la face et/ou la surface à usiner de l'ébauche soit opposée au support et de telle sorte qu'entre le support d'une part et l'ébauche d'autre part, le cas échéant en utilisant au moins un agent d'étanchéité, il résulte une cavité remplissable ;
(b) par la suite, on remplit de manière au moins sensiblement complète la cavité d'une composition liquéfiée par échauffement et/ou transférée dans un état fluide, telle que définie dans les revendications 1 à 9 ; et
(c) on fait durcir et/ou solidifier ensuite la composition de préférence par refroidissement, pour obtenir un composite, comportant le support avec l'ébauche fixée dessus au moyen de la composition ; et
(d) on procède à un usinage de l'ébauche fixée sur le support, notamment par enlèvement de copeaux, par fraisage, par meulage, par polissage ou similaires et on obtient de cette manière la lentille ophtalmique et/ou optique, de préférence le verre de lunettes à base de matière plastique.

13. Utilisation d'une composition d'un agent bloquant, telle que définie dans l'une quelconque des revendications 1 à 9 dans la fabrication de lentilles ophtalmiques et/ou optiques, de préférences de verres de lunettes à base de matière plastique.

14. Utilisation d'une composition d'un agent bloquant, telle que définie dans l'une quelconque des revendications 1 à 9 pour l'usinage d'ébauches pour des lentilles ophtalmiques et/ou optiques, de préférence d'ébauches de verres de lunettes sur base de matière plastique et/ou pour la fabrication d'ébauches pour des lentilles ophtalmiques et/ou optiques, de préférence d'ébauches de verres de lunettes sur base de matière plastique, pour fixer l'ébauche sur un support, notamment une pièce en bloc.
